(19) Europäisches Patentamt / European Patent Office / Office européen des brevets

(11) **EP 2 125 450 B1**

(12) **FASCICULE DE BREVET EUROPEEN**

(45) Date de publication et mention
de la délivrance du brevet:
**23.05.2012 Bulletin 2012/21**

(51) Int Cl.:
**B60R 25/00** (2006.01)   **G07C 9/00** (2006.01)
**B60R 25/04** (2006.01)

(21) Numéro de dépôt: **07858051.1**

(22) Date de dépôt: **21.12.2007**

(86) Numéro de dépôt international:
**PCT/EP2007/064439**

(87) Numéro de publication internationale:
**WO 2008/077937 (03.07.2008 Gazette 2008/27)**

(54) **PROCEDE ET SYSTEME DE DETECTION D'UN OBJET D'IDENTIFICATION DANS UN VEHICULE**

VERFAHREN UND SYSTEM ZUR ERKENNUNG UND IDENTIFIZIERUNG EINES OBJEKTS IN EINEM FAHRZEUG

METHOD AND SYSTEM FOR DETECTING AN IDENTIFICATION OBJECT IN A VEHICLE

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **22.12.2006 FR 0611342**

(43) Date de publication de la demande:
**02.12.2009 Bulletin 2009/49**

(73) Titulaire: **Valeo Sécurité Habitacle**
**94046 Créteil Cedex (FR)**

(72) Inventeurs:
• **LECONTE, ERIC**
**F-94042 Creteil (FR)**
• **VIOLLEAU, STEPHANE**
**F-94042 Creteil (FR)**

(74) Mandataire: **Jacquot, Ludovic R. G. et al**
**Valeo Sécurité Habitacle**
**Service Propriété Industrielle**
**76 Rue Auguste Perret**
**ZI Europarc**
**94046 Créteil Cedex (FR)**

(56) Documents cités:
**EP-A- 1 542 172    FR-A- 2 878 964**

EP 2 125 450 B1

**Description**

**Domaine de l'invention**

La présente invention concerne un procédé de détection d'un objet d'identification dans une zone de communication de référence autour d'un dispositif d'antenne(s) et un système de détection mettant en oeuvre le procédé de détection.
Elle trouve une application particulière pour un véhicule automobile.

**Etat de la technique**

Selon un état de la technique connu, il existe un procédé de détection d'un objet d'identification tel qu'un badge qui fait office de récepteur-émetteur, pour savoir s'il se trouve à l'intérieur ou à l'extérieur d'un zone de communication de référence telle que l'habitacle d'un véhicule. Si le badge se trouve à l'intérieur du véhicule, l'utilisateur est autorisé à démarrer le véhicule.
Un exemple est donné dans FR 2 878 964.
La détection du badge est basée sur un champ magnétique émis à partir d'une puissance constante à partir d'une régulation en tension d'un dispositif d'antennes situé dans le véhicule.
Une telle solution présente l'inconvénient d'être difficile à mettre en oeuvre. En effet, le dispositif d'antennes étant alimenté en tension par la tension batterie véhicule, à chaque variation de cette tension, il est nécessaire de la réajuster pour permettre au dispositif d'antennes d'émettre à une puissance constante. Par ailleurs, les dispersions des composants du dispositif d'antennes ne sont pas compensées.

**Objet de l'invention**

L'invention a donc plus particulièrement pour but de permettre une détection d'un objet identifiant avec une solution simple permettant de compenser les dispersions des composants du dispositif d'antennes.
Elle propose donc un procédé de détection d'un objet d'identification dans une zone de communication de référence autour d'un dispositif d'antenne(s), caractérisé en ce qu'il comprend les étapes de :

- mesurer un champ magnétique reçu par l'objet d'identification relatif à un champ magnétique émis par le dispositif d'antenne(s), ce champ émis correspondant à un courant circulant dans le dispositif d'antenne(s),

- calculer un coefficient de détection en fonction d'un ratio champ magnétique reçu - champ magnétique étalon, et en fonction d'un ratio courant circulant dans le dispositif d'antenne(s) - courant étalon relatif au champ magnétique étalon,

- comparer le coefficient de détection calculé avec au moins un coefficient de détection de référence relatif à un champ magnétique de référence,

- déterminer en fonction de cette comparaison si l'objet d'identification se trouve dans la zone de communication de référence, cette zone étant définie par le champ magnétique de référence.

Ainsi, comme on le verra en détail plus loin, le calcul du coefficient de détection associé à une position de l'objet d'identification, permet de compenser les variations du courant circulant dans le dispositif d'antenne(s) dues aux variations des dispersions des composants en se basant sur la linéarité qui existe entre ce courant et le champ magnétique associé.
Selon des modes de réalisation non limitatifs, le procédé selon l'invention présente les caractéristiques supplémentaires suivantes.
Selon un mode de réalisation non limitatif, la zone de communication de référence Correspond à une zone représentative d'un habitacle de véhicule. Cela va permettre de déterminer si l'objet d'identification se trouve à l'intérieur ou à l'extérieur de l'habitacle d'un véhicule.
Selon un mode de réalisation non limitatif, au moins deux zones de référence sont définies autour du dispositif d'antenne(s) auxquelles est associé un coefficient de détection de référence respectif. Cela va permettre de positionner une antenne dans l'habitacle d'un véhicule à n'importe quel endroit.
Selon un mode de réalisation non limitatif, le procédé comprend en outre une étape supplémentaire de contrôle de la position de l'objet d'identification par un dispositif d'antenne(s) extérieur si le coefficient calculé se situe entre les coefficients de détection de référence associés respectivement aux deux zones de référence. Cela va permettre de

EP 2 125 450 B1

savoir si l'objet d'identification se trouve à l'intérieur ou à l'extérieur d'un habitacle de voiture.

Selon un mode de réalisation non limitatif, le champ magnétique émis est généré au moyen d'un signal tension carré symétrique appliqué en entrée du dispositif d'antenne(s), le signal tension générant le courant circulant dans le dispositif d'antenne(s). Cela permet de supprimer les harmoniques de rang pair dans le signal courant mesuré et d'obtenir ainsi une mesure plus précise du courant.

Selon un mode de réalisation non limitatif, le signal tension en entrée du dispositif d'antenne(s) comporte un rapport cyclique de 1/3. Cela permet de supprimer les harmoniques de rang multiples de trois dans le signal courant mesuré et d'obtenir ainsi une mesure plus précise du courant.

Selon un mode de réalisation non limitatif, pour le calcul du ratio courant circulant dans le dispositif d'antenne (s) - courant étalon, l'impédance du dispositif d'antenne(s) est considérée comme étant égale à une impédance étalon correspondant au courant étalon. Cela permet de ne pas prendre en compte les variations de l'impédance du dispositif d'antenne(s) et ainsi d'effectuer une mesure en tension plutôt qu'une mesure en courant.

Selon un deuxième objet, l'invention concerne un système de détection d'un objet d'identification dans une zone de communication de référence autour d'un dispositif d'antenne(s), le système comprenant un dispositif d'antenne (s) apte à émettre un champ magnétique vers un objet d'identification, caractérisé en ce qu'il comporte :

- L'objet d'identification pour mesurer un champ magnétique reçu relatif au champ magnétique émis par le dispositif d'antenne(s), ce champ émis correspondant à un courant circulant dans le dispositif d'antenne(s),

- Un dispositif d'émission-réception comprenant un dispositif de commande pour :

  - comparer un coefficient de détection avec au moins un coefficient de détection de référence relatif à un champ magnétique de référence, le coefficient de détection étant fonction d'un ratio champ magnétique reçu - un champ magnétique étalon, et fonction d'un ratio courant circulant dans le dispositif d'antenne(s) - courant étalon relatif au champ magnétique étalon, et

  - déterminer en fonction de cette comparaison si l'objet d'identification se trouve dans une zone de communication de référence autour du dispositif d'antenne(s), cette zone étant définie par le champ magnétique de référence.

Selon un mode de réalisation non limitatif, le dispositif de commande est en outre apte à effectuer le calcul du coefficient de détection.

Selon un mode de réalisation non limitatif, l'objet d'identification du système de détection est en outre apte à envoyer un signal radiofréquence au dispositif d'émission-réception comprenant une information représentative du champ magnétique reçu après la réception d'une porteuse pure basse fréquence. Cela permet à l'objet d'identification de mesurer correctement le champ magnétique reçu.

Selon un mode de réalisation non limitatif, le système de détection comprend un mode de diagnostic pour activer le calcul d'un coefficient de détection de référence et pour renvoyer une valeur de ce coefficient. Cela permet de programmer le système avec au moins une valeur de coefficient de détection de référence.

Selon un troisième objet, l'invention concerne un dispositif de commande étant apte à coopérer avec un dispositif d'antenne(s) et avec un objet d'identification, caractérisé en ce qu'il comprend :

- une mémoire pour sauvegarder la valeur d'un courant étalon relatif à un champ magnétique étalon et sauvegarder la valeur d'au moins un coefficient de détection de référence,

- un contrôleur pour :

  - comparer un coefficient de détection avec au moins un coefficient de détection de référence relatif à un champ magnétique de référence, le coefficient de détection étant fonction d'un ratio champ magnétique reçu - champ magnétique étalon, et fonction d'un ratio courant circulant dans le dispositif d'antenne(s) - courant étalon relatif au champ magnétique étalon, et

  - déterminer en fonction de cette comparaison si l'objet d'identification se trouve dans une zone de communication de référence autour du dispositif d'antenne(s), cette zone étant définie par le champ magnétique de référence.

Selon un mode de réalisation non limitatif, le dispositif de commande est en outre apte à effectuer le calcul du coefficient de détection. Cela permet un gain en temps de calcul, le dispositif de commande ayant une puissance de calcul importante. Dans ce cas, le calcul n'est pas effectué dans l'objet d'identification. Cela permet d'obtenir un objet d'identification avec une puissance de calcul plus faible d'où un coût moins important pour l'objet d'identification.

3

Selon un quatrième objet, l'invention concerne un objet d'identification apte à coopérer avec un dispositif d'émission-réception et avec un dispositif d'antenne(s), caractérisé en ce qu'il comprend :

-   un récepteur pour recevoir un champ magnétique relatif à un champ magnétique émis par le dispositif d'antenne(s),

-   un dispositif de mesure pour mesurer le champ magnétique reçu, et

-   un émetteur pour envoyer au dispositif d'émission-réception un signal comprenant une information représentative du champ magnétique reçu pour permettre un calcul d'un coefficient de détection en fonction d'un ratio champ magnétique reçu - un champ magnétique étalon et en fonction d'un ratio courant circulant dans le dispositif d'antenne (s) - courant étalon relatif au champ magnétique étalon.

Selon un mode de réalisation non limitatif, l'information représentative du champ magnétique reçu est le ratio champ magnétique reçu - champ magnétique étalon.

Selon un mode de réalisation non limitatif, l'objet d'identification comprend en outre un contrôleur pour calculer le ratio champ magnétique reçu - champ magnétique étalon. Cela permet à l'objet d'identification de ne pas répondre par un signal radiofréquence au dispositif de commande si le coefficient est inférieur à un coefficient de référence. Ainsi, il y moins d'occupation de la bande radiofréquence.

Selon un mode de réalisation non limitatif, l'information représentative du champ magnétique reçu est le champ magnétique reçu. Cela évite à l'objet d'identification d'effectuer lui-même le calcul du ratio champ magnétique reçu - champ magnétique étalon.

Selon un cinquième objet, l'invention concerne un véhicule automobile comprenant un habitacle dans lequel est disposé un dispositif de commande selon l'une des caractéristiques précédentes et un dispositif d'antenne(s), le dispositif de commande étant apte à coopérer avec le dispositif d'antenne(s) et avec un objet d'identification selon l'une des caractéristiques précédentes.

**Brève description des figures**

D'autres caractéristiques et avantages de la présente invention seront mieux compris à l'aide de la description en regard des dessins, donnés à titre d'exemples non limitatifs, parmi lesquels :

-   la Figure 1 est une vue de dessus d'un véhicule comprenant un dispositif d'émission-réception mettant en oeuvre un mode de réalisation du procédé selon de l'invention;
-   la Figure 2 est un diagramme représentatif d'une réception d'un objet d'identification détecté par un mode de réalisation du procédé selon l'invention;
-   la Figure 3 est un deuxième schéma d'une vue de dessus d'un véhicule dans lequel sont représentés une antenne et un objet d'identification, et explicatif d'un mode de réalisation du procédé selon l'invention;
-   la Figure 4 est un troisième schéma d'une vue de dessus d'un véhicule dans lequel sont représentés une antenne et un objet d'identification, et explicatif d'un mode de réalisation procédé selon l'invention;
-   la Figure 5 est un quatrième schéma d'une vue de dessus d'un véhicule dans lequel sont représentés une antenne et un objet d'identification, et explicatif d'un mode de réalisation du procédé selon l'invention;
-   la Figure 6 représente un diagramme courant-champ magnétique reçu explicatif de certaines étapes exécutées par un mode de réalisation du procédé selon l'invention;
-   la Figure 7 est un diagramme d'un mode de réalisation non limitatif du procédé selon l'invention;
-   la Figure 8 représente un spectre de fréquence d'un courant circulant dans un dispositif d'antennes et mesuré dans le cadre d'un mode de réalisation du procédé selon la Figure 7;
-   la Figure 9 représente un premier mode de réalisation d'un signal de tension appliqué au dispositif d'antennes dans le cadre d'un mode de réalisation du procédé la Figure 7 et un spectre de fréquence de courant associé;
-   la Figure 10 représente un deuxième mode de réalisation d'un signal de tension appliqué au dispositif d'antennes dans le cadre d'un mode de réalisation du procédé selon la Figure 7 et un spectre de fréquence de courant associé;
-   la Figure 11 représente un champ magnétique dans l'espace dont une composante correspond à un champ magnétique émis dans le cadre d'un mode de réalisation du procédé la Figure 7;
-   la Figure 12 est un cinquième schéma d'une vue de dessus d'un véhicule dans lequel sont représentés une antenne et un objet d'identification, et explicatif d'un mode de réalisation du procédé selon l'invention;
-   la Figure 13 représente un mode de réalisation non limitatif d'un système de détection mettant en oeuvre une partie d'un mode de réalisation du procédé de la Figure 7;
-   la Figure 14 est un mode non limitatif d'échanges d'informations entre un dispositif de commande, un dispositif d'antennes et un objet d'identification compris dans le système de détection de la Figure 13 dans le cadre d'un mode de réalisation du procédé de la Figure 7; et

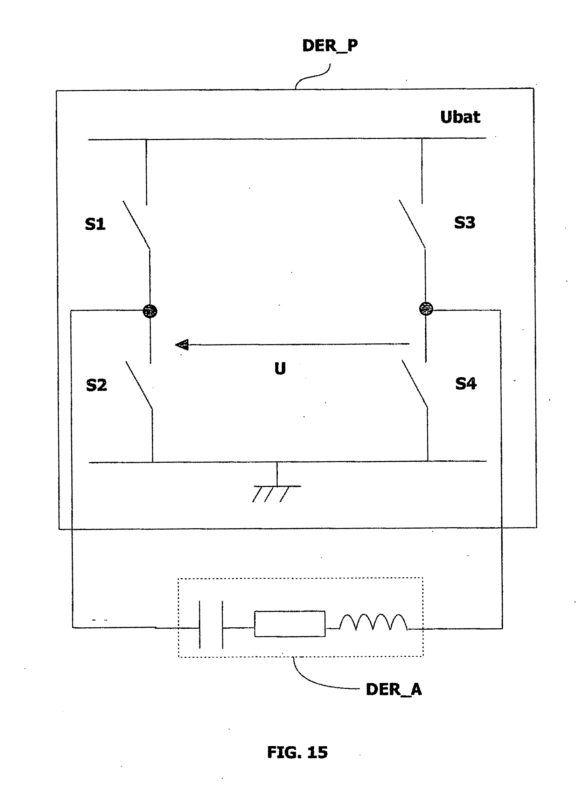

- la Figure 15 représente un mode de réalisation non limitatif d'un étage de puissance compris dans le mode de réalisation du système de détection de la Figure 13;

**Description détaillée de modes de réalisation non limitatifs de l'invention**

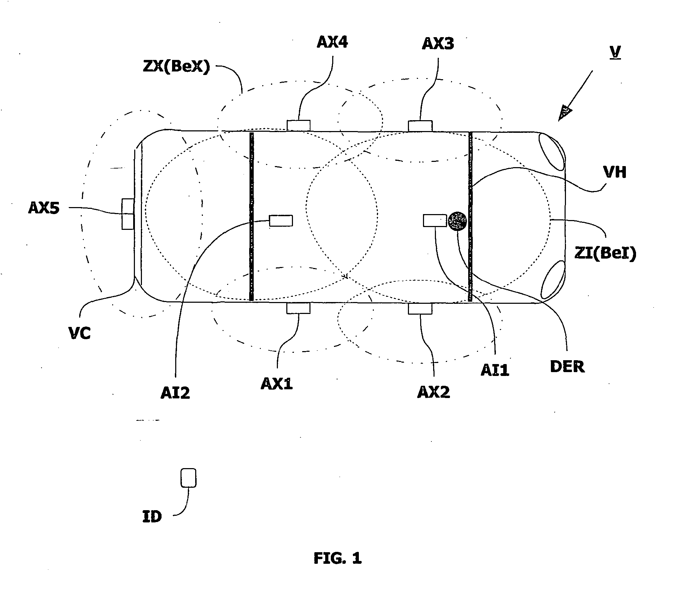

Sur la Figure 1, est représenté un véhicule V muni d'un dispositif d'émission-réception DER de signaux permettant de contrôler un dispositif d'antennes A, et le dispositif d'antennes A comprenant, dans un exemple non limitatif une pluralité d'antennes, ici des antennes dites extérieures AX et des antennes dites intérieures AI, toutes ces antennes coopérant avec un récepteur-émetteur ID, le tout formant un système de détection décrit plus loin.

Dans l'exemple non limitatif de la Figure, sont représentées cinq antennes extérieures AX dont quatre AX1, AX2, AX3 et AX4 sont situées à l'extérieur de l'habitacle VH du véhicule V, ici sur les poignées des portières, et une AX5 dans le parechoc arrière VC du véhicule. Par ailleurs deux antennes intérieures AI1, AI2 sont situées dans l'habitacle VH, ici à l'avant et à l'arrière du véhicule. Chaque antenne est alimentée en courant alternatif basse fréquence par le dispositif d'émission-réception DER et émet un champ magnétique Be, nommé BeI pour les antennes intérieures et BeX pour les antennes extérieures. Au moyen de leur champ magnétique émis B respectif, les antennes extérieures AX permettent de détecter si le récepteur-émetteur ID se situe à proximité du véhicule V, dans un exemple non limitatif à une distance inférieure à 1,5 m, tandis que les antennes intérieures AI permettent de détecter si le récepteur-émetteur ID est dans l'habitacle VH du véhicule.

Le récepteur-émetteur ID, dans cette application, est dans un exemple non limitatif, un objet d'identification ID porté par un utilisateur du véhicule V, par exemple un badge, une clef, un porte clef appelé en anglais «keyfob» etc. L'exemple du badge d'identification sera pris comme exemple dans la suite de la description.

Au moyen du courant alternatif, les antennes A communiquent avec le badge ID par transmission de données en émettant un signal basse fréquence BF et le badge ID répond en émettant un signal radiofréquence RF. Dans un exemple non limitatif, le signal basse fréquence BF se situe aux alentours de 125kHz et le signal radiofréquence RF se situe aux alentours de 433 MHz. On peut redescendre à 20kHz pour le signal basse fréquence BF ou aller jusqu'au GigaHz pour le signal radiofréquence RF en fonction des bandes de fréquences disponibles pour différents pays (315MHz pour l'Asie, 868Mhz pour certains pays d'Europe ou 915Mhz en Amérique etc.).

En fonction de la réponse, les antennes A déterminent si le badge ID est autorisé à ouvrir les portières du véhicule, ou s'il est autorisé à démarrer le véhicule. On notera que dans un exemple non limitatif, pour que le badge ID soit autorisé à ouvrir les portières, l'utilisateur doit par exemple toucher une poignée de porte. A cet effet, les poignées comprennent des détecteurs appropriés.

Les antennes extérieures AX permettent de déterminer une première zone de communication ZX avec le badge ID pour autoriser un accès véhicule. Cette zone est définie par le champ magnétique émis par lesdites antennes. Les antennes extérieures AX doivent donc garantir au moins une distance minimale à partir de laquelle le badge ID est autorisé à accéder au véhicule. Les antennes intérieures AI permettent de déterminer une deuxième zone ZI de communication avec le badge ID pour autoriser un démarrage. Cette zone est définie par le champ magnétique émis par les antennes intérieures. Les antennes intérieures AI doivent donc garantir une zone fixe à partir de laquelle le badge ID est autorisé à démarrer le véhicule, cette zone étant dans ce cas l'habitacle VH du véhicule V.

On notera que en pratique, le champ magnétique émis par ces antennes intérieures AI a une couverture plus grande que l'habitacle VH mais est limité par la carcasse métallique de l'habitacle VH du véhicule V et déborde par les ouvertures des fenêtres.

On rappelle que lorsqu'un dispositif d'antennes A émet un champ magnétique, le badge ID reçoit un champ magnétique qui est fonction du champ magnétique émis Be du dispositif d'antennes A, ce dernier définissant la zone autour de lui représentatif de son champ magnétique Be que l'on a appelé également zone de communication. La zone de communication est également définie par rapport à un seuil de réception du badge ID.

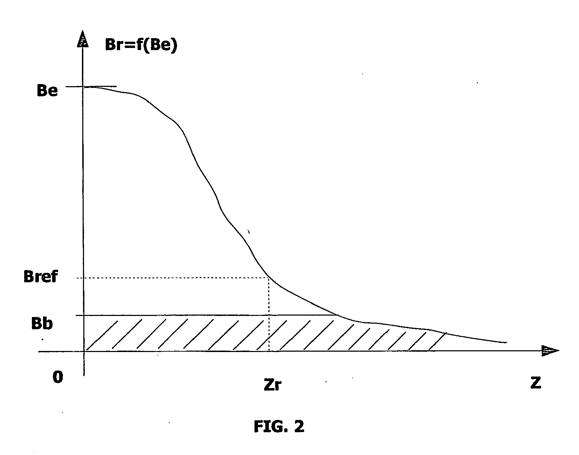

La Figure 2 illustre la position du badge ID par rapport à une antenne A en fonction du champ magnétique Be de cette antenne A et donc du champ magnétique Br reçu correspondant.

On peut voir que plus le badge ID se situe loin d'une antenne A émettant un champ magnétique émis Be, plus le champ magnétique reçu Br correspondant est faible. Lorsque le badge ID se trouve au même endroit que l'antenne A, le champ magnétique reçu Br est théoriquement égal au champ magnétique émis Be.

Le champ magnétique de référence Bref correspond donc à une zone Zr de communication de référence dans laquelle un badge ID peut communiquer avec une antenne A et le dispositif d'émission-réception DER.

Le badge ID qu'il soit à l'intérieur ou à l'extérieur de cette zone de communication de référence répond aux signaux envoyés par le dispositif d'antennes A en envoyant une réponse radiofréquence RF comme on va le voir plus loin.

On notera que ce champ magnétique de référence Bref est fixé de manière à éviter les champs magnétiques parasites Bb provenant des perturbations radio comme illustré sur la Figure 2 et sa valeur est supérieure à la valeur des champs magnétiques parasites.

Le procédé de détection du badge ID pour savoir s'il se trouve dans une zone de communication de référence Zr d'une antenne, en particulier d'une antenne intérieure AI se base sur un calcul de coefficient de détection C associé à une position du badge ID en fonction d'un coefficient de détection de référence Cref correspondant à la zone de communication de référence Zr, le coefficient de référence dépendant d'un courant étalon 10 et d'un champ magnétique étalon Br0.

La détermination du courant étalon 10, du champ magnétique étalon Br0, d'un coefficient de détection de référence Cref et enfin d'un coefficient de détection C selon une position donnée associée au badge ID, sont décrits ci-après.

• Détermination d'un courant étalon I0 et d'un champ magnétique étalon Br0 associé.

L'exemple est pris avec une antenne intérieure AI1.

On applique un courant étalon 10 au dispositif d'antennes A représenté par l'antenne AI1 de sorte qu'elle émette un champ magnétique étalon Be0. On place le badge ID à une position donnée P0 quelconque par rapport à l'antenne AI1, et on mesure le champ magnétique reçu par le badge ID, ce dernier représentant le champ magnétique étalon reçu Br0 et déterminant une zone de communication étalon Ze. Ainsi, ce courant étalon I0 et ce champ étalon associé Br0 vont servir d'étalons par la suite.

On notera que la calibration (étalon courant 10 et champ magnétique étalon Br0 associé) du système de détection (décrit plus loin) comprenant le dispositif d'émission-réception DER se fait de façon pratique en usine.

• Calcul d'un coefficient de détection de référence Cref.

Le calcul d'un coefficient de détection de référence Cref s'effectue pour une zone de communication de référence Zr donnée en fonction des étalons courant 10-champ magnétique Br0 selon la formule suivante.

$Cref = (I0/Im)^2*(Bref/Br0)^2$ **[1]** avec Im le courant circulant dans l'antenne AI1 et générant le champ magnétique de référence Bref correspondant à la zone de communication de référence Zr donnée lorsque le badge ID se trouve à la limite de cette zone de communication Zr.

On notera que la formule **[1]** s'écrit également de la manière suivante :

$Cref = (Ue/Um)^2*(Zm/Z0)^2*(Bref/Br0)^2$ **[2]** car $I0 = Ue/Z0$ et $Im = Um/Zm$, avec Zm l'impédance réelle de l'antenne AI1 et Um la tension d'alimentation appliquée aux bornes de l'antenne AI1 pour générer le courant Im (correspondant ici à la tension batterie Ubat), et Z0 l'impédance étalon de l'antenne AI1 et Ue la tension étalon appliquée aux bornes de l'antenne AI1 pour générer le courant I0.

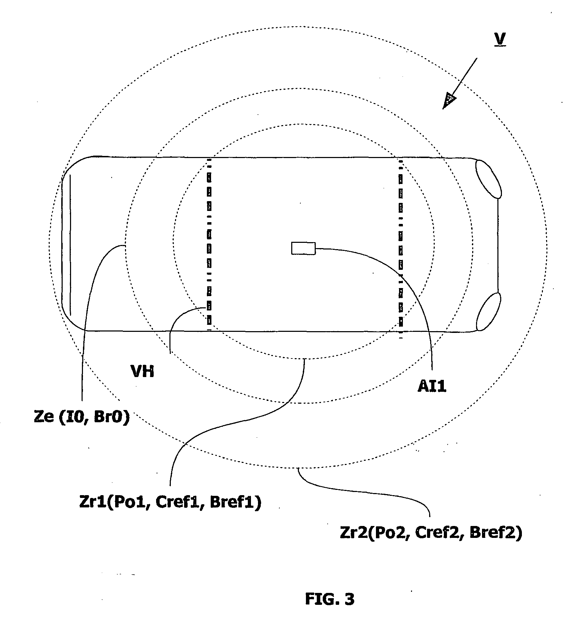

Dans un exemple non limitatif, selon la Figure 3, on a défini deux zones de communication de référence différentes Zr1, Zr2 pour deux positions, en limite de zone, respectives différentes Po1, Po2 du badge ID, auxquelles est associé un coefficient de détection de référence respectif Cref1, Cref2.

On notera que si l'on se trouve à la limite de la zone de communication étalon Ze, pour tout courant Im, on aura un coefficient de détection étalon égal à 1. En effet, à ce moment, si Im = Cte*I0, avec Cte une constante, alors Be = Cte *Be0 (car le champ magnétique émis Be est proportionnel au courant Im) et Br = Cte*Br0 (car on retrouve la même linéarité entre le champ magnétique émis Be et le champ magnétique émis étalon Be0 qu'entre le champ magnétique reçu Br et le champ magnétique étalon reçu Br0). Selon la formule **[1]**, on a $((Im/Cte)/Im)^2 * ((Cte*Br0)/Br0)^2 = 1$

Dans l'exemple pris dans la Figure 3 la première zone de communication de référence Zr1 a été définie de manière à ce qu'elle corresponde à un habitacle VH d'un modèle de voiture V donné.

Cette zone Zr1 est, ici, plus petite que la zone étalon Ze; elle se situe donc à l'intérieure de la zone étalon Ze. Le coefficient de détection de référence associé Cref1 est donc égal à une constante et supérieur à 1 car dans ce cas le champ magnétique Br1 associé est supérieur au champ étalon Br0.

Par contre, en ce qui concerne la deuxième zone de référence Zr2, elle est plus grande que la zone étalon Ze; elle se situe autour de cette dernière. Le coefficient de détection de référence associé Cref2 est donc inférieur à 1 car dans ce cas le champ magnétique Br1 associé est inférieur au champ étalon Br0.

On notera que l'on peut déterminer chaque zone de référence Zr en fonction d'un habitacle d'un modèle différent de véhicule V. Par exemple, la deuxième zone de référence de la Figure 3 peut très bien représenter un deuxième habitacle d'un véhicule plus grand que l'habitacle VH associé à la première zone de référence Zr1.

On notera que la détermination d'un coefficient de référence Cref se fait également de façon pratique sur véhicule.

On notera également que lors de la fabrication du badge ID, on écrit la valeur du champ étalon Br0 dans une mémoire du badge ID, par exemple une mémoire réinscriptible type EEPROM. Il en est de même pour les coefficients de référence Cref. De façon pratique, pour qu'un badge ID puisse fonctionner avec n'importe quel modèle M de véhicule, si les coefficients de référence Cref correspondant à chaque modèle M de véhicule sont stockés dans le véhicule. Ainsi, on aura un badge universel.

Par ailleurs, lors de la fabrication du dispositif d'émission-réception DER, on écrit la valeur du courant étalon I0 dans une mémoire de ce dispositif.

Enfin, on y écrit également, les coefficients de détection de référence Cref calculé correspondant aux zones de communication de référence Zr que l'on veut prendre en compte.

• Calcul d'une zone de communication de référence optimale Zrp.

Pour ce calcul, on prend un exemple non limitatif avec une antenne unique AI1.

Dans un mode de réalisation non limitatif, on peut déterminer une zone de communication de référence optimale Zrp correspondant à un habitacle VH d'un véhicule de manière à avoir le maximum de couverture à l'intérieur de l'habitacle VH et le minimum de débordement à l'extérieur. La détermination s'effectue de la manière suivante.

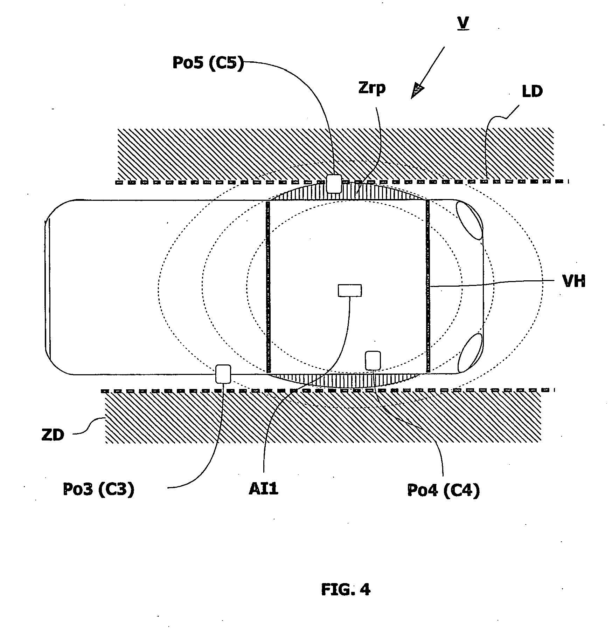

Le badge ID est placé à des positions critiques, c'est-à-dire aux extrémités de l'habitacle VH du véhicule, par exemple aux positions Po3 et Po4 illustrées à la Figure 4, et à l'extérieur de l'habitacle face à une ouverture (ou une vitre) au plus près de l'antenne d'émission AI1, par exemple à la position Po5.

Pour chaque position critique, une requête est demandée par un organe de calcul CALC du dispositif d'émission-réception DER (décrit plus loin) afin d'obtenir les coefficients de détection C3, C4 et C5 associés respectivement aux positions Po3, Po4 et Po5 par le calcul **[1]** vu précédemment.

On détermine alors la valeur optimale du coefficient de détection de référence Cref en fonction de ces coefficients obtenus permettant de décider si le badge ID se trouve à l'intérieur ou à l'extérieur de l'habitacle VH du véhicule V. Ce choix dépendra du choix entre la couverture totale de l'habitacle VH et l'interdiction de tous débordements. On prendra une valeur qui permet d'avoir le maximum de couverture à l'intérieur de l'habitacle VH et le minimum de débordement à l'extérieur.

Dans des exemples non limitatifs, on peut prendre la valeur minimum si l'on veut garantir une couverture intérieure maximale ou encore on peut prendre la valeur maximale si l'on veut garantir un débordement minimal ou encore faire un compromis entre les deux.

Sur la Figure 4, la limite de débordement acceptable est illustrée LD, tandis que la zone de détection intérieure optimale Zrp est illustrée par des hachures verticales et la zone de débordements ZD par des hachures en diagonale.

• Calcul d'un coefficient de détection C correspondant à une position donnée du badge ID.

Afin de connaître la position du badge ID par rapport à une zone de communication de référence Zr donnée, on effectue un calcul de coefficient de détection C associé à cette position, de la même manière dont le calcul d'un coefficient de détection de référence Cref est effectué et on compare le coefficient de détection C obtenu avec un coefficient de référence Cref voulu. Ainsi, on applique la formule **[1]** vu précédemment, soit $C = (I0/Im)^2*(Br/Br0)^2$ avec Br étant le champ magnétique Br reçu par le badge ID à une position donnée, et Im le courant circulant dans l'antenne AI1.

Comme on le verra en détail ci-après, quelles que soient les variations du courant Im circulant dans l'antenne AI1, elles sont compensées par le calcul effectué dans le coefficient de détection C.

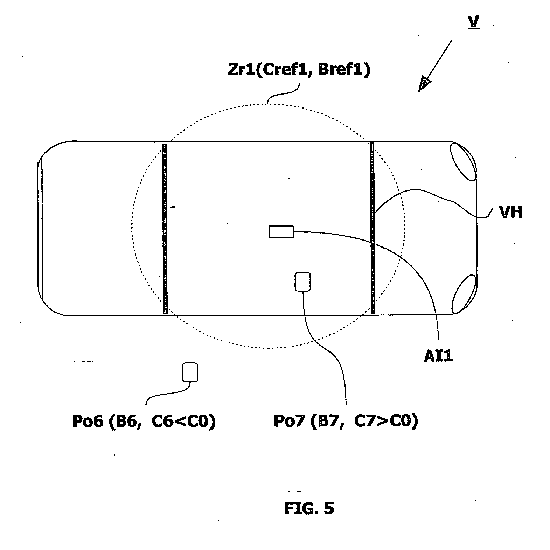

Par exemple, si l'on prend la première zone de communication de référence Zr1 correspondant à l'habitacle du véhicule VH, comme illustré à la Figure 5, lorsque le badge ID se situe à une position extérieure Po6 à l'habitacle de véhicule VH, le coefficient de détection associé à cette position est $C6 = (I0/Im)^2*(B6/Br0)^2$ avec B6 le champ magnétique reçu par le badge ID lorsqu'il est à la position Po6. Dans ce cas, on obtient une valeur de C6 tel que C6 est inférieur au coefficient de détection de référence Cref1 car dans ce cas le champ magnétique B6 reçu par le badge ID à la position Po6 est inférieur au champ magnétique de référence Bref1 associé à la zone de communication de référence Zr1.

On en déduit que le badge ID se trouve à l'extérieur de l'habitacle VH correspondant à la zone de communication de référence Zr1 choisie.

Par contre, lorsque le badge ID se situe à l'intérieur de l'habitacle VH, à une position Po7 par exemple, le coefficient de détection associé à cette position est $C7 = (I0/Im)^2*(B7/Br0)^2$ avec B7 le champ magnétique reçu par le badge ID lorsqu'il est à la position Po7. Dans ce cas, on obtient une valeur de C7 telle que C7 est supérieur à Cref1 car dans ce cas le champ magnétique B7 du badge ID à la position Po7 est supérieur au champ magnétique de référence Bref1 associé à la zone de communication de référence Zr1. On en déduit que le badge ID se trouve à l'intérieur de l'habitacle VH correspondant à la zone de communication de référence Zr1 choisie.

Ainsi, si l'on veut comparer la position du badge ID par rapport à une zone de communication de référence donnée Zr, il suffit de calculer le coefficient de détection C correspondant à cette position.

On notera que bien entendu, la zone de communication de référence Zr peut être différente de l'habitacle VH du véhicule comme indiqué précédemment.

On notera que le calcul d'un coefficient de détection C se base sur la notion suivante.

On rappelle que lorsque l'on applique un courant initial théorique Ith au dispositif d'antennes A, en raison de l'impédance ZA du dispositif d'antennes A, le courant Im circulant dans ledit dispositif n'est en pratique pas égal au courant initial théorique Ith. Il existe donc un écart entre le courant théorique Ith et le courant mesuré Im circulant dans le dispositif d'antennes.

Or à l'émission, cet écart se retrouve de manière proportionnel entre le champ magnétique émis théorique Be0 et le champ magnétique réel émis Be en raison de la linéarité entre un courant et le champ magnétique associé. En effet, on rappelle que Be = K*I avec K constante dépendant notamment du nombre de spires dans le dispositif d'antennes (décrite plus loin), soit Be/I = K.

Par ailleurs, cet écart se retrouve également à la réception. On a ainsi, un écart proportionnel entre le champ magnétique théorique reçu Br0 et le champ magnétique reçu réel Br et donc la linéarité se retrouve à la réception. En effet, un champ magnétique reçu Br est fonction d'un champ magnétique émis Be avec un rapport de $\dfrac{1}{d^3}$ , avec d représentant la distance entre l'objet d'identification ID et le dispositif d'antennes A.

En conséquence, étant donné que pour le calcul du coefficient C, le badge ID est immobile à une certaine position, les écarts de courant et les écarts de champ reçu se compensent (car ils sont proportionnels).

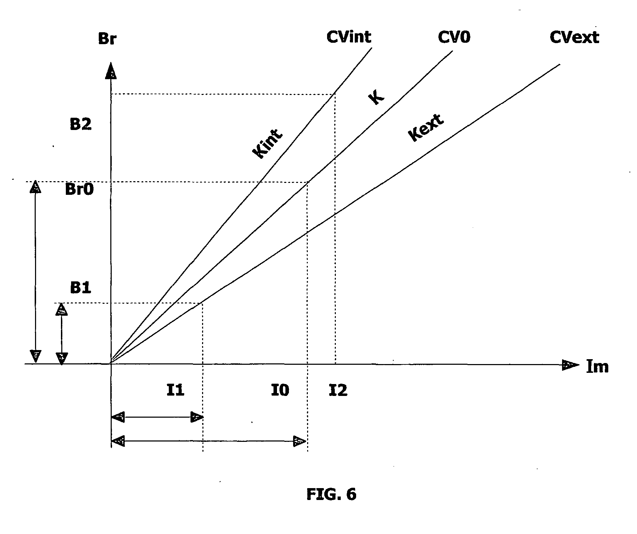

Une telle linéarité est représentée à la Figure 6 dans laquelle l'axe des abscisses représente le courant Im circulant dans le dispositif d'antennes A et l'axe des ordonnées le champ magnétique reçu Br.

Le champ reçu étalon Br0 et le courant étalon 10 sont représentés. La courbe associée CV0 comprend une pente égale à K.

Le courant I1 correspond à un champ reçu B1 qui est inférieur au champ étalon reçu Br0 et dont la courbe CV1 est représentative d'un coefficient de détection Cext inférieur à 1. Dans ce cas le badge ID se situe à l'extérieur de la zone étalon Ze.

On peut voir que du fait de la linéarité, on a Br0=K*I0 et B1=Kext*I1 avec K et Kext constantes, d'où I1 /Br0 proportionnel à I0/B1 à une constante près.

Il en est de même avec le courant I2 correspond à un champ reçu B2 qui est supérieur au champ étalon reçu Br0 et dont la courbe CV2 est représentative d'un coefficient de détection Cint supérieur à 1. On a B2 = Kint*I2, avec Kint constante, d'où I2/Br0 proportionnel à I0/B2 à une constante près. Dans ce cas le badge ID se situe à l'intérieur de la zone étalon Ze.

On rappelle qu'il existe en particulier deux types de variations d'un champ magnétique reçu Br :

- des variations dues à des variations du courant Im circulant dans le dispositif d'antennes A, ces dernières étant dues à des variations d'impédance ZA du dispositif d'antennes ou à des variations de tension d'alimentation Ubat du dispositif d'antennes, et
- des variations dues à un changement de position du badge ID. Plus le badge ID s'éloigne du dispositif d'antennes A, plus le champ reçu Br diminue, comme on l'a vu précédemment.

Grâce au calcul de coefficient de détection C, les premières variations sont compensées qu'elles aient pour origine des dispersions des composants du dispositif d'antennes A (variations de l'impédance ZA) ou les variations de la tension d'alimentation Ubat du dispositif d'antennes A.

On notera que les variations de l'impédance ZA sont indépendantes des variations de la tension d'alimentation Ubat.

En ce qui concerne la compensation des variations de l'impédance ZA, lorsque le badge ID est immobile à une certaine position, si l'impédance ZA diminue, le courant mesuré Im augmente (car Ubat = ZA*Im), le champ émis Be par le dispositif d'antennes A augmente (car Be = K*Im), et par suite le champ magnétique reçu Br par l'objet d'identification ID augmente.

En conséquence, la fraction I0/Im a diminué tandis que la fraction Br/Br0 a augmenté. Comme Be/Im = K, la fraction Br/Br0 a d'autant augmenté que la fraction 10/Im a diminué. Ainsi, les variations de l'impédance ZA ont été compensées dans le calcul du coefficient de détection C.

Ainsi, lorsque le badge ID est à une position donnée, le coefficient de détection C reste constant malgré les variations de l'impédance ZA.

Par ailleurs, lorsque le courant mesuré Im est fixe, si le badge ID est mobile, par exemple s'il se rapproche du véhicule V, le champ magnétique reçu Br augmente. Par suite, la fraction Br/Br0 augmente tandis que la fraction I0/Im reste constante. A ce moment, le coefficient de détection C augmente.

Ainsi, le coefficient de détection C est bien représentatif d'une position du badge ID.

On rappelle que cette impédance ZA peut varier en raison de l'environnement du dispositif d'antennes A tel que notamment des changements de température. Ou des dispersions de composants

En ce qui concerne la compensation des variations de la tension d'alimentation Ubat, Le même type de raisonnement est à faire dans le cas où Ubat varie.

On a I = (Ubat*K1sin ($\alpha\pi$))/ZA, K1 étant une constante

A rapport cyclique $\alpha$ constant, on a Im = (Ubat*K2)/ZA, avec K2 constante, lorsque le badge ID est immobile à une certaine position, si la tension d'alimentation Ubat augmente, le courant mesuré Im augmente (car Ubat = K2*ZA*Im) le champ émis Be par le dispositif d'antennes A augmente (car Be = K*Im), et par suite le champ magnétique reçu Br par l'objet d'identification ID augmente.

En conséquence, la fraction I0/Im a diminué tandis que la fraction Br/Br0 a augmenté. Comme Be/Im = K, la fraction Br/Br0 a d'autant augmenté que la fraction I0/Im a diminué.

Ainsi, les variations de la tension d'alimentation Ubat ont été compensées dans le calcul du coefficient de détection C.

Ainsi, lorsque le badge ID est à une position donnée, le coefficient de détection C reste constant malgré les variations de la tension d'alimentation Ubat.

Ainsi, on peut voir que le coefficient de détection C calculé selon la formule **[1]** est bien représentatif du positionnement du badge ID et permet lors de la mesure du courant Im circulant dans le dispositif d'antennes A de compenser les variations de la tension d'alimentation Ubat et de l'impédance ZA du dispositif d'antennes A. Aucun asservissement en tension ou en courant n'est nécessaire pour compenser ces variations. Quelles que soient ces variations, pour une position donnée du badge ID, on aura toujours le même coefficient de détection C.

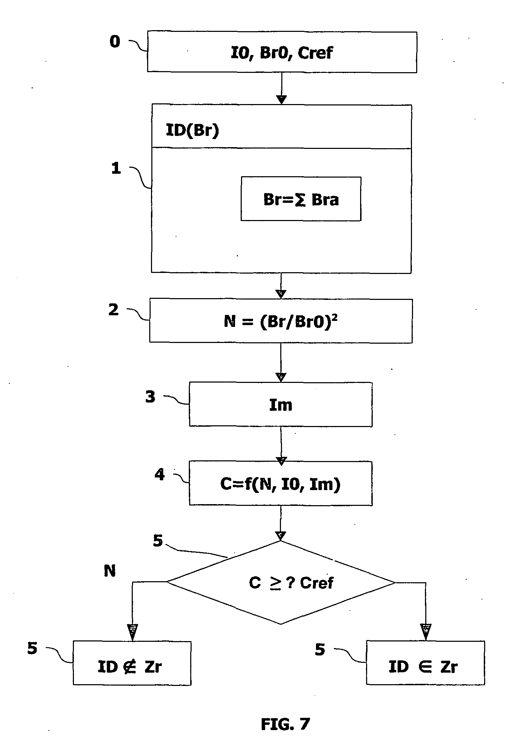

Après avoir vu le principe du calcul d'un coefficient de détection C, la détection d'un badge ID à une position Po donnée par rapport à une zone de communication de référence Zr du dispositif d'antennes A est décrite ci-après et est illustrée à la Figure 7.

**Dans une première étape 1)**, on mesure un champ magnétique reçu Br par l'objet d'identification ID relatif au champ magnétique émis Be par le dispositif d'antennes A.

Dans un mode de réalisation non limitatif, l'objet d'identification ID comporte trois antennes internes A, chacune d'elle étant orientées différemment (dans un plan orthogonal) de manière à ce que le badge ID puisse, quelque soit sa position, capter le champ magnétique (qui est directionnel) émis par le dispositif d'antennes A.

Le champ magnétique reçu Br comporte donc trois composantes $Br_a$, soient Brx, Bry, Brz, et est égal à la racine carré de $(Brx^2 + Bry^2 + Brz^2)$.

On notera que la mesure de ce champ reçu Br est effectué dans l'objet d'identification ID par un dispositif de mesure type RSSI d'un amplificateur («Received Signal Strength Indication») bien connu de l'homme du métier.

**Dans une deuxième étape 2)**, on calcule le ratio champ magnétique reçu Br par champ magnétique étalon Br0.

On obtient N = $(Br/Br0)^2$

On remarquera que le ratio est au carré car cela évite de faire des calculs de racines carré et donc de gagner en temps de calcul. Bien entendu, on pourrait également faire le calcul avec les racines carrées.

Dans un premier mode de réalisation non limitatif, ce calcul s'effectue dans le badge ID par un calculateur ID_CALC du badge ID décrit plus loin.

Dans un deuxième mode de réalisation non limitatif, ce calcul s'effectue par un calculateur DER_CALC du dispositif d'émission-réception DER décrit plus loin. Dans ce cas, le badge ID envoie le champ magnétique reçu mesuré Br vers le dispositif d'émission-réception DER.

**Dans une troisième étape 3)**, on calcule un coefficient de détection C en fonction de ce calcul N et du ratio courant étalon 10 - courant mesuré Im circulant dans le dispositif d'antennes A.

Dans un premier mode de réalisation non limitatif, le calcul du ratio de courants s'effectue selon la formule **[1]** : C = $(I0/Im)^2 * (Br/Br0)^2$ tel que décrit auparavant.

Dans un deuxième mode de réalisation non limitatif, le calcul du ratio de courants s'effectue en négligeant les variations de l'impédance Zm du dispositif d'antennes A. On part ainsi de la formule **[2]** : C = $(Ue/Um)^2 * (Zm/Z0)^2 * (Bref/Br0)^2$ et on prend comme hypothèse que Zm = Z0. On obtient C = $(Ue/Um)^2 * (Bref/Br0)^2$.

Les variations de l'impédance Zm du dispositif d'antennes A ne sont donc pas prises en compte dans le calcul de ratio de courants.

Ainsi, pour le calcul du ratio courant circulant dans le dispositif d'antennes A - courant étalon I0, l'impédance Zm du dispositif d'antennes A est considérée comme étant égale à l'impédance Z0 étalon correspondant au courant étalon I0.

Bien que la mesure du coefficient de détection C, soit un peu moins précise que dans le premier mode de réalisation, cela permet d'effectuer une mesure en tension au lieu d'une mesure en courant, la mesure en tension étant plus simple à réaliser.

Le calcul du coefficient C peut par exemple être effectué par un organe de calcul DER_CALC du dispositif d'émission-réception DER décrit plus loin. Dans ce cas, le badge ID a envoyé au préalable le ratio N=$(Br/Br0)^2$ au dispositif d'émission-réception DER.

Le calcul du coefficient C peut être effectué dans un autre exemple dans le badge ID. Dans ce cas, le dispositif d'émission-réception DER a envoyé au préalable :

- la mesure du courant Im ou de la tension Um au badge ID, ou
- le ratio I0/Im ou $(I0/Im)^2$ ou U0/Um ou $(U0/Um)^2$, ou
- la valeur de 10 (ou U0) et la valeur de Im (ou Um), ou encore
- la valeur de 10 (ou U0), de Im (ou Um) et Br0.

On notera que bien entendu au préalable, on a effectuer soit une mesure de courant Im circulant dans le dispositif d'antennes A et correspondant à l'intensité du champ magnétique reçu Br, soit une mesure de tension Um. Les mesures de courant ou tension sont décrites ci-après.

• Mesure de courant

Afin d'obtenir une mesuré précise de ce courant Im, dans un mode de réalisation non limitatif, le champ magnétique émis Be du dispositif d'antennes A est généré au moyen d'une tension carré symétrique U0 de rapport cyclique $\alpha$ appliquée en entrée du dispositif d'antennes correspondant à un courant Im circulant dans le dispositif d'antennes A.

Dans un mode de réalisation non limitatif, le dispositif d'antennes A est accordé à la fréquence d'émission (la fréquence étant par exemple de 125kHz). Cela permet d'émettre un champ magnétique plus important en amplitude à la fréquence d'émission, et d'avoir un filtre passe-bande FL. Le filtre passe-bande FL permet ainsi de réduire l'amplitude des harmoniques h (sauf pour l'harmonique de rang 1).

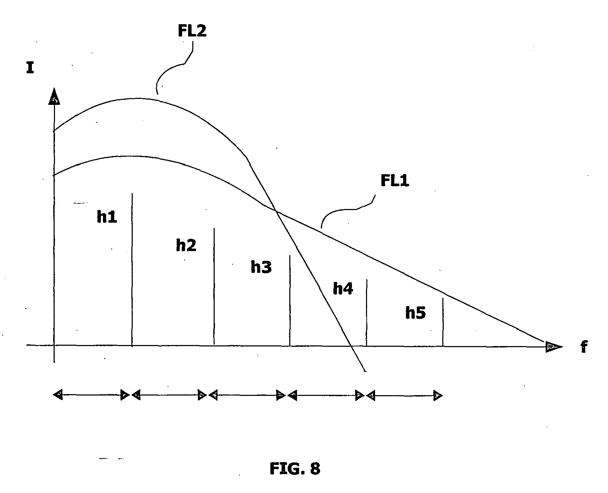

En effet, à l'émission, du côté du dispositif d'antennes A, la valeur du courant I circulant dans le dispositif d'antennes A est égale à la somme des harmoniques h qui sont présentes dans la bande passante du filtre compris dans le dispositif d'antennes A. Selon la sélectivité du filtre, on aura toutes les harmoniques si le filtre est large bande tel que représenté en FL1 sur la Figure 8, ou une partie seulement des harmoniques si le filtre est bande étroite tel que représenté en FL2 sur la Figure 8. A l'émission donc, la valeur du champ émis Be est fonction de ce courant Im avec des harmoniques h.

A la réception, du côté du badge ID, la valeur du courant 1 qui est prise en compte est égale uniquement à l'harmonique h1 de rang 1 appelé fondamental. En effet, le champ magnétique reçu Br correspond au champ magnétique émis Be à la valeur du fondamental uniquement et non à la somme des harmoniques.

On doit par conséquent effectuer une mesure de courant I de manière à éliminer le plus possible les harmoniques autres que le fondamental h1. La tension carré symétrique U0 de rapport cyclique $\alpha$, va permettre d'obtenir par la suite une génération précise et une mesure précise de la puissance émise Pe correspondante sur l'harmonique h1 de rang 1 en supprimant des courants parasites dues aux autres harmoniques.

On notera que la tension U0 peut être obtenue au moyen d'un étage de puissance P à pont en H avec commande à pont complet décrit plus loin.

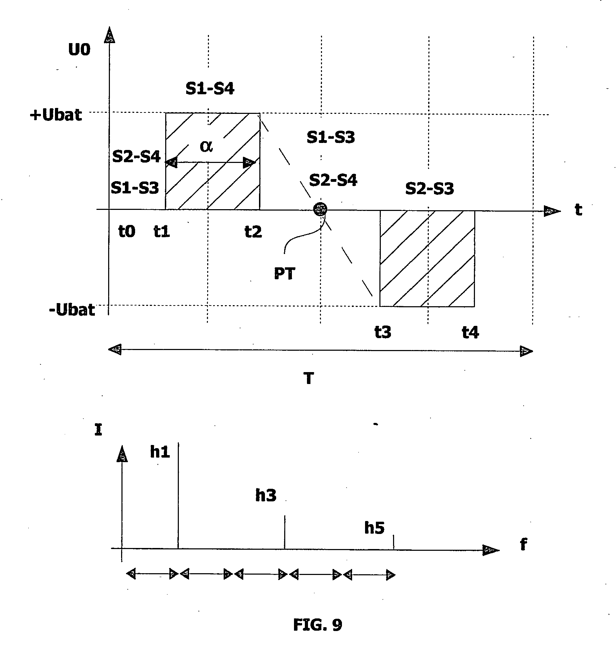

Comme on peut le voir sur la Figure 9, dans le cas d'une tension carré symétrique U0, les harmoniques de rang pair du courant mesuré Im ont été supprimées. Comme on peut le voir, la tension U0 est symétrique par rapport au point PT.

En effet, lors d'une représentation en fréquence, une harmonique de rang n est représentée par le terme $a_n \cos n\omega t + b_n \sin n\omega t$.

La tension U0 est une fonction impaire, soit f(-x) = -f(x), son développement en série de Fourier ne comporte donc que des termes en sinus, les coefficients $a_n$ étant nuls.

Ainsi, en sachant que $Cn = \dfrac{1}{T} \int f(x)\, e^{-jn\omega x}\, dx$ et $Cn = \dfrac{1}{2}(an - jbn)$, on obtient Cn = j (2E/πn).sin (nπα).sin(n(π/2))

et

$$bn = (4E/\pi n).\sin(n\pi\alpha).\sin(n(\pi/2))$$

avec $\omega = 2\pi/T$, avec T la période et E l'amplitude de la tension d'alimentation Ubat du dispositif d'antennes A.

La série de Fourier correspondant au signal tension symétrique U0 est donc égale à :

$$f(x) = \Sigma \ (4E/\pi n).\sin \ (n\pi\alpha).\sin(n(\pi/2)).\sin \ n\omega x,$$

avec n = 1, ...,∞ soit

$$f(x) = \Sigma \ (4E/(\pi(2p+1))). \ \sin \ ((2p+1) \ \pi\alpha).\sin((2p+1)(\pi/2)).\sin \ (2p+1) \ \omega x,$$

avec p = 0, ...,∞
ce qui donne le spectre avec les harmoniques à la Figure 9.
La valeur du fondamental h1 est donnée par :

$$h1 = (4E/\pi) \ .\sin \ \pi\alpha. \ \sin \ \omega x$$

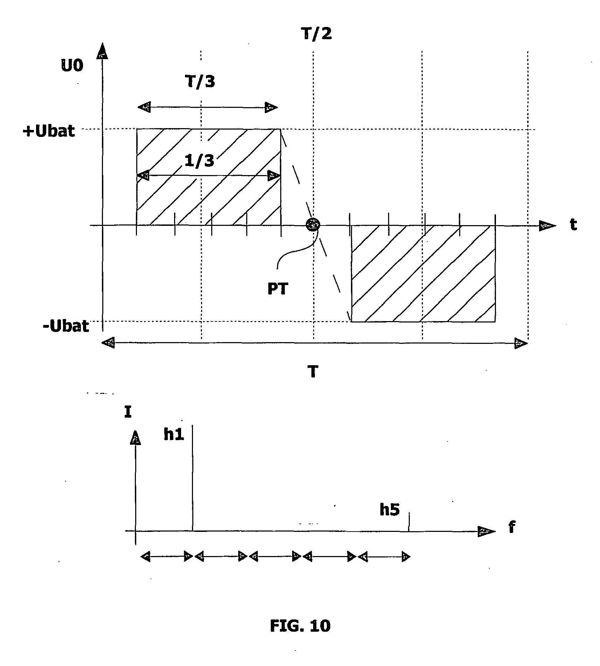

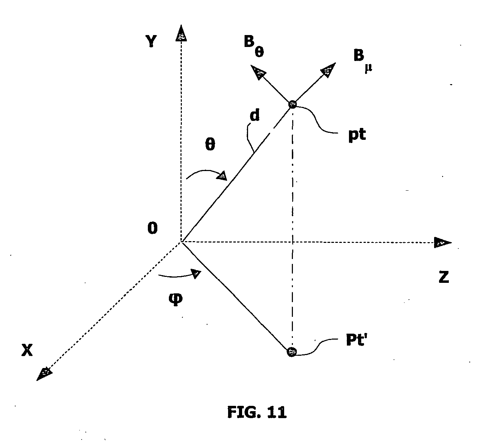

Par ailleurs, on notera que le fait d'avoir une tension carrée évite une dissipation d'énergie dans les transistors de l'étage de puissance P (décrit plus loin) permettant de générer cette tension. En effet, il existe une consommation d'énergie calorifique uniquement lors des phases de transitions contrairement à une tension type sinusoïdale où la consommation est nettement plus importante. L'étage de puissance P ne chauffe donc pas trop.
On notera que la valeur du rapport cyclique $\alpha$ ajustable permet de régler la valeur de la puissance émise Pe.
Ainsi, la tension symétrique carré U0 permet d'une part de régler la puissance émise Pe à une valeur voulue correspondant à la zone de communication voulue (et donc de générer de façon précise la puissance émise Pe) et d'autre part d'obtenir une mesure précise de la puissance réelle émise Pe correspondant à la puissance reçue effective du badge ID car les harmoniques de rang pair sont supprimées.
Dans une variante non limitative, la tension U0 comporte un rapport cyclique de 1/3. Comme on peut le voir à la Figure 10, dans ce cas, les harmoniques de rang multiple de 3 du courant mesuré Im ont été supprimées en plus des harmoniques de rang pair ce qui limite considérablement le nombre d'harmoniques à l'intérieur de la bande passante du filtre du dispositif d'antennes A. Il ne reste plus que les harmoniques de rang 1 et 5, cette dernière étant négligeable.
Ainsi, on obtient une mesure précise du courant Im circulant dans le dispositif d'antennes A. Le courant mesuré Im est donc dans ce cas représentatif de l'amplitude du fondamental du champ magnétique émis. Par conséquent, on peut en déduire le champ magnétique émis Be par le dispositif d'antennes A correspondant précisément au champ magnétique reçu Br en sachant que le champ magnétique émis Be est proportionnel au courant mesuré Im.
On rappelle que de manière connue de l'homme du métier, un champ magnétique B comporte trois composantes dans un espace orthogonal x, y, z telles qu'illustrées à la Figure 11 qui sont les suivantes.

$B_{\mu} = (Ae \ Im/2\pi d^3) * \cos \theta,$
$B_{\theta} = (Ae \ Im/4\pi d^3) * \sin \theta,$ et
$B\varphi = 0.$

avec Ae la surface effective d'une antenne par laquelle s'écoule le champ magnétique B, d la distance qui permet une mesure du champ magnétique B à partir du centre de l'antenne.
On rappelle également que $Ae = N_w * A * \mu_{rod}$ avec $N_w$ le nombre de spires dans l'antenne. A la section transversale de la ferrite des spires, et $\mu_{rod}$ la perméabilité apparente de la ferrite.

• Mesure de tension

La mesure de tension s'effectue de manière connue au moyen d'un convertisseur analogique/numérique.
**Dans une quatrième étape 4),** on détermine en fonction de la valeur du coefficient de détection C si l'objet d'identification ID se trouve dans la zone de référence Zr choisie autour du dispositif d'antennes A.
Ainsi, si le coefficient de détection C est supérieur au coefficient de référence Cref associé à la zone de référence Zr choisie, le badge ID appartient à cette zone de référence Zr, sinon il est à l'extérieur.
Dans le mode de réalisation où la zone de référence est la zone Zr1 correspondant à l'habitacle VH du véhicule, si le coefficient de détection C est supérieur à Cref1, le badge ID se situe à l'intérieur de l'habitacle, sinon il se situe à l'extérieur.
Ainsi, grâce à ce coefficient de détection C, il est très facile de détecter si un badge ID se situe dans une zone de communication de référence Zr définie autour du dispositif d'antennes A et en particulier si cette zone est l'habitacle VH d'un véhicule V et ce sans se soucier des dispersions des composants du dispositif d'antennes A ou des variations de la tension batterie, ces dispersions étant compensées dans le calcul même du coefficient C.

On notera que dans un mode de réalisation non limitatif, le calcul d'un coefficient de détection C s'effectue à chaque émission d'un signal basse fréquence par le dispositif d'antennes A. Ainsi cela permet d'avoir une bonne maîtrise de la zone d'émission Zr autour du dispositif d'antennes à chaque émission et donc une meilleure performance du système de détection SYS décrit plus loin.

Par ailleurs, l'utilisation du coefficient de détection C présente un intérêt supplémentaire dans le sens où il permet de déterminer plusieurs zones de communication de référence Zr entre le dispositif d'antennes A et le badge ID comme vu précédemment. Cela va permettre en particulier aux constructeurs de véhicules de positionner les antennes intérieures AI à n'importe quel endroit dans l'habitacle VH du véhicule. Un exemple est illustré ci-après.

• Positionnement d'une antenne intérieure AI

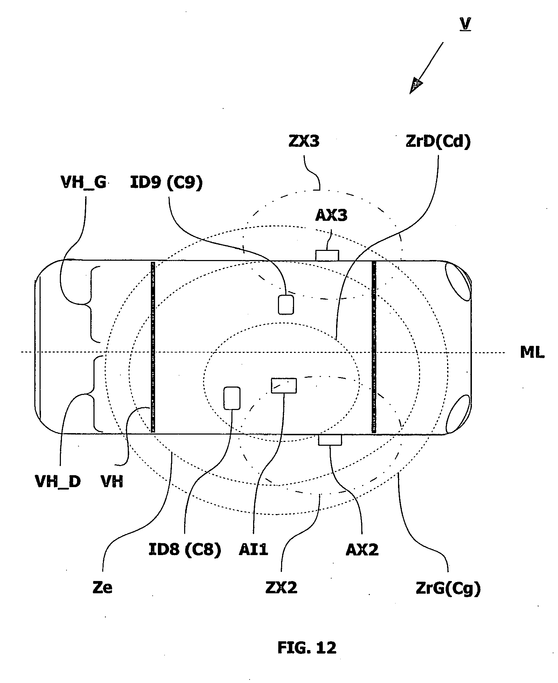

Comme illustré à la Figure 12, on place une antenne intérieure AI1 à n'importe quel endroit dans un habitacle de voiture VH. Dans l'exemple pris, on a une unique antenne intérieure AI1. Ici, on peut voir qu'elle n'est pas centrée par rapport à l'habitacle VH mais est dans la partie droite du véhicule V. L'habitacle VH du véhicule est séparé en deux parties, une gauche VH_G et une droite VH_D par rapport à une ligne médiane ML du véhicule V.

Dans un mode de diagnostic, avant le mode en fonctionnement, on détermine deux zones de communication de référence ZrG et ZrD. La première zone ZrG est définie de sorte que la partie gauche VH_G de l'habitacle du véhicule V soit au minimum couverte par cette zone ZrG, tandis que la deuxième zone ZrD est définie de sorte que la partie droite VH_D de l'habitacle du véhicule soit au minimum couverte par cette zone ZrD.

On détermine ensuite respectivement des coefficients de détection de référence associés CG et CD associées à ces deux zones de communication ZrG et ZrD comme décrit précédemment selon la formule **[1].**

Ces coefficients de détection CG et CD sont inscrits dans une mémoire DER_MEM du dispositif d'émission-réception DER.

En mode de fonctionnement, la détection du badge ID à une position donnée Po s'effectue selon les étapes suivantes.

- On calcule le coefficient de détection C associé à la position Po du badge ID.
- On compare le coefficient de détection C associé à la position donnée Po avec le coefficient de détection de référence gauche CG.

    - Si C est inférieur à CG, on en déduit que le badge ID est à l'extérieur de l'habitacle VH du véhicule.
    - Sinon, on compare le coefficient C avec le coefficient de référence droit CD.

        - Si C est supérieur à CD, on en déduit qu'il est à l'intérieur de l'habitacle VH du véhicule V,
        - Sinon, cela veut dire que le coefficient C est supérieur à CG mais inférieur à CD. Dans ce cas, on contrôle le badge ID par une antenne extérieure AX pour savoir de quel côté il se trouve. Par exemple, lorsqu'il est du côté droit de la voiture V, il est vu et contrôlé par l'antenne extérieure AX2 telle qu'illustrée sur la Figure 12, tandis que lorsqu'il est du côté gauche de la voiture V, il est vu et contrôlé par l'antenne extérieure AX3 telle qu'illustrée sur la Figure 12.
        - Si le badge ID est à droite de la voiture V, on en déduit qu'il est à l'extérieur de l'habitacle VH du véhicule V.
        - Si le badge ID est à gauche du véhicule V, on en déduit qu'il est à l'intérieur de l'habitacle VH du véhicule V.

Le même raisonnement est à faire si l'antenne AI1 se situe à gauche du véhicule. Dans ce cas, si le badge ID est à droite de la voiture V, on en déduit qu'il est à l'intérieur de l'habitacle VH du véhicule V et si le badge ID est à gauche du véhicule V, on en déduit qu'il est à l'extérieur de l'habitacle VH du véhicule V.

On notera que l'on peut effectuer le contrôle du badge ID par une antenne extérieure AX selon le même principe de coefficient C que pour une antenne intérieure AI.

Ainsi, grâce à l'utilisation de deux zones de référence ou plus pour une antenne AI1 du dispositif d'antennes A correspondant chacune à un endroit de l'habitacle VH du véhicule, on a une meilleure couverture de l'habitacle VH du véhicule V et il n'est plus nécessaire de placer l'antenne AI1 au centre du véhicule.

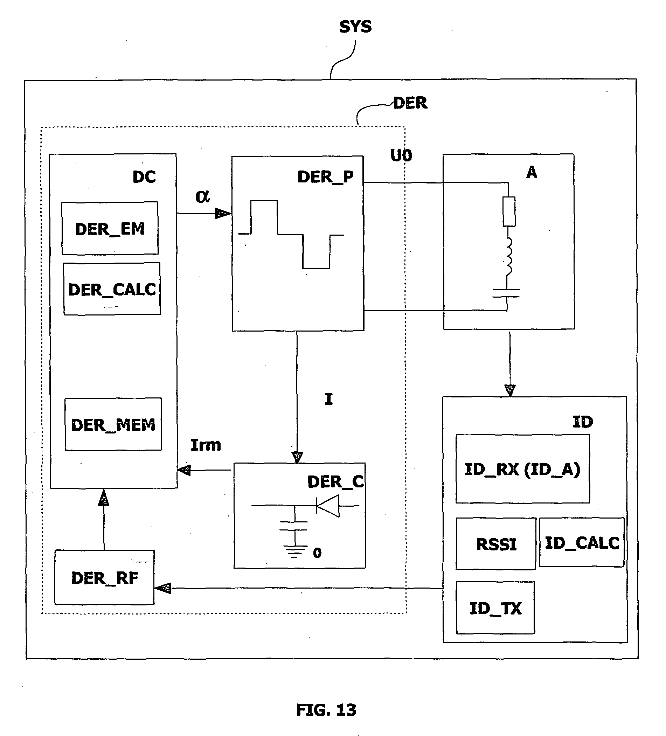

Le procédé qui a été décrit est mis en oeuvre par un système de détection SYS illustré dans un mode de réalisation non limitatif à la Figure 13 et comprenant :

- un dispositif d'émission-réception DER comprenant :

- un dispositif de commande DER_DC,
- un étage de puissance DER_P,
- un dispositif de mesure de courant DER_C, et
- un récepteur DER_RF de signaux pour notamment recevoir une réponse du badge d'identification ID comportant notamment l'information IB représentative du champ magnétique reçu Br.

- Le dispositif d'antennes A, et
- le badge d'identification ID.

On notera que selon un mode de réalisation non limitatif, tous les éléments du dispositif d'émission-réception DER se trouvent sur une même carte électronique. Cela permet un dialogue plus rapide et plus fiable entre ces différents éléments. Au contraire, lorsque ces éléments sont séparés, les liaisons de communication les reliant peuvent être plus facilement perturbés et les débits de ces liaisons peuvent être plus faibles.

On notera que de façon pratique, le système de détection SYS possède un mode permettant d'acquérir un coefficient de référence Cref et de le transmettre à une personne effectuant la mise au point de manière par la suite à le programmer en mémoire. Par exemple, il comportera un mode de diagnostic et acquisition par une ligne de communication associée.

Les éléments du système de détection SYS sont décrits plus en détail ci-après.

• Le badge d'identification ID.

Il comporte notamment :

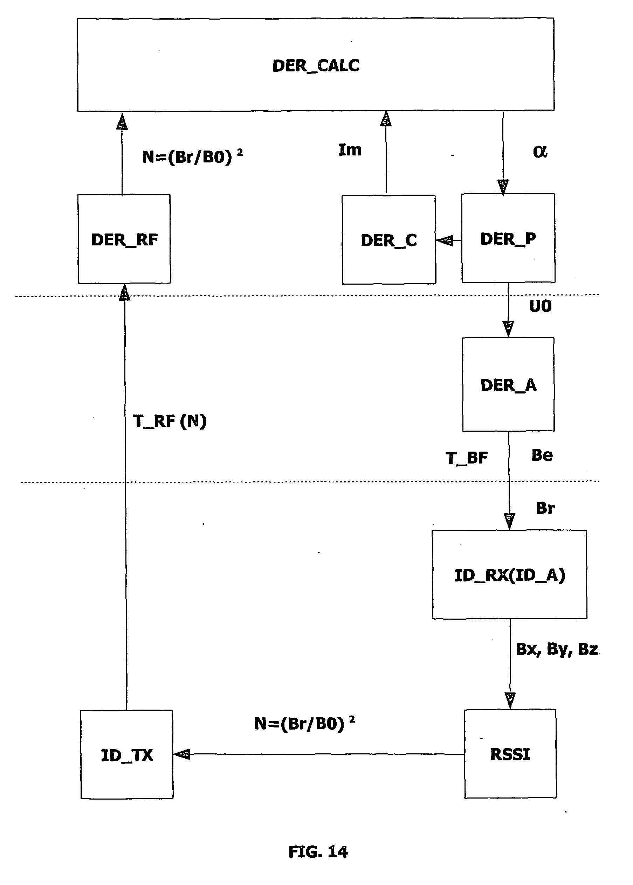

- un récepteur ID_RX comprenant ici trois antennes ID_A orientées selon un espace orthogonal pour recevoir un champ magnétique émis Be par le dispositif d'antennes A tel qu'illustré à la Figure 14,
- un dispositif de mesure type RSSI («Received Signal Strength Indication») pour effectuer une mesure du champ magnétique reçu Br comprenant les composantes Bx, By, Bz des trois antennes, et pour effectuer le calcul de champ Br normé par le champ étalon Br0, et
- un émetteur ID_TX pour envoyer un signal radio fréquence T_RF vers le récepteur DER_RF du dispositif d'émission-réception DER et comprenant une information IB représentative du champ magnétique reçu Br.

Le badge ID peut comporter en outre :

- un organe de calcul ID_CALC pour calculer le ratio N champ magnétique reçu Br - champ magnétique étalon Br0, et
- une mémoire ID_MEM pour sauvegarder une valeur d'un champ magnétique étalon Br0.

Dans un premier mode de réalisation non limitatif, l'information IB représentative du champ magnétique reçu Br est le ratio $N = (Br/Br0)^2$ ou encore le ratio Br/B0.

Dans un deuxième mode de réalisation non limitatif, l'information IB représentative du champ magnétique reçu Br est le champ magnétique mesuré Br lui-même.

On notera que dans un mode de réalisation non limitatif, le ratio $N = (Br/Br0)^2$ est envoyé par un canal radiofréquence juste après la réception d'une porteuse pure basse fréquence. Cette porteuse pure basse fréquence permet au badge ID de mesurer correctement le champ magnétique reçu Br car elle évite une variation de ce champ Br pendant la mesure par le badge ID.

• Le dispositif d'antennes A.

Dans un premier mode de réalisation non limitatif, le dispositif d'antennes A est composé d'un circuit RL. Ce dernier nécessite d'amplifier la tension d'alimentation du dispositif d'antennes pour permettre une émission de champ magnétique approprié.

Dans un deuxième mode de réalisation non limitatif, le dispositif d'antennes A est composé d'un circuit RLC. Ce dernier permet à partir de la tension d'alimentation du dispositif d'antennes A, qui est ici la tension batterie Ubat du véhicule V, d'amplifier directement le courant I circulant dans le dispositif d'antennes A, pour permettre une émission de champ magnétique approprié, sans utiliser d'asservissement en tension. C'est donc une solution plus simple à mettre en oeuvre pour obtenir une amplification. Ce circuit RLC fait également office de filtre passe-bande comme vu précédemment.

Le dispositif d'antennes A permet d'envoyer un signal basse fréquence T_BF vers l'objet d'identification ID, ce signal étant porté par un champ magnétique émis Be, tel qu'illustré à la Figure 14.

• Le dispositif de commande DER_DC comporte notamment :

- un émetteur DER_EM de signaux pour notamment émettre des signaux de commande en direction de l'étage de puissance DER_P pour fournir la tension d'alimentation Ubat au dispositif d'antennes A ou encore émettre un signal comprenant si nécessaire la mesure du courant Im (ou le ratio de courants I0/Im, ou le courant Im et le courant étalon 10 et/ou le champ magnétique étalon 10), en direction du badge ID,
- un organe de calcul DER_CALC (par exemple un microprocesseur ou un ASIC) pour :

  - adapter le rapport cyclique $\alpha$ de la tension symétrique U0 appliquée au dispositif d'antennes A,
  - recevoir la valeur du courant mesuré Im par le dispositif de mesure de courant DER_C,
  - Calculer le ratio courant étalon I0-courant mesuré Im circulant dans le dispositif d'antennes,
  - Calculer le coefficient de détection C associé à une position du badge ID en fonction de ce ratio et du ratio champ magnétique reçu Br - champ magnétique étalon Br0, et
  - comparer le coefficient de détection calculé C avec un coefficient de détection de référence Cref.

- une mémoire DER_MEM, de type réinscriptible EEPROM, pour sauvegarder la ou les valeurs du courant étalon 10 relatif au champ étalon Br0, et la valeur(s) du coefficient(s) de détection de référence Cref (une valeur de coefficient de référence par antenne).

Dans un mode de réalisation non limitatif, le dispositif de commande DER_DC peut en outre comporter le récepteur DER_RF de signaux pour notamment recevoir un signal T_RF du badge d'identification ID comprenant :

- l'information IB représentative du champ magnétique reçu, cette dernière comprenant :

  - le ratio $N=(Br/Br0)^2$ ou Br/Br0, ou
  - la mesure du champ magnétique reçu Br par le badge ID,
  - ou encore le coefficient C si ce dernier est calculé par le badge ID.

• L'étage de puissance P.

Il fournit la tension carrée symétrique U0 en entrée du dispositif d'antennes A et permet une mesure par la suite du courant I circulant dans le dispositif d'antennes A en diminuant les effets des courants parasites dues aux harmoniques et donc permet de mesurer précisément la puissance Pe du dispositif d'antennes A. Il est illustré à la Figure 13. Dans un mode de réalisation non limitatif, il fonctionne à pont en H avec commande à pont complet et est commandé par le dispositif de commande DER_DC.
Il comporte en particulier quatre interrupteurs S1 à S4. Ces interrupteurs sont dans un exemple non limitatif des transistors type MOSFET.
Il fonctionne de la manière suivante tel qu'illustré à la Figure 9.

- Entre les intervalles t0-t1 et t2-t3, soit tous les interrupteurs sont ouverts, soit les interrupteurs S2 et S4 sont fermés, soit les interrupteurs S1 et S3 sont fermés, les autres étant ouverts. La tension U0 est nulle.
- Entre l'intervalle t1-12, les interrupteurs S1-S4 sont fermés, les autres étant ouverts. La tension U0 est positive.
- Entre l'intervalle t3-t4, les interrupteurs S2-S3 sont fermés, les autres étant ouverts. La tension U0 est négative.

Les deux diagonales du pont S2-S3 et S1-S4 sont commandées par deux signaux de commande retardés l'un par rapport à l'autre d'une demi-période permettant ainsi d'obtenir la symétrie.
On obtient ainsi la tension carrée symétrique U0.

• Le dispositif de mesure de courant DER_C.

Dans un premier mode de réalisation non limitatif, le dispositif de mesure DER_C est un détecteur d'amplitude crête. C'est un moyen simple pour mesurer le courant I circulant dans le dispositif d'antennes A. Il permet de mesurer l'amplitude maximale du courant, ce qui suffit car les harmoniques gênantes ont été supprimées par la commande symétrique et le rapport cyclique de 1/3. Ainsi, cette mesure va donner la valeur du fondamental de ce courant I. Il est composé de manière classique d'une diode et d'une capacité tel qu'illustré à la Figure 13. Bien entendu d'autres moyens de mesure du courant peuvent être utilisés.

Il envoie la valeur du courant mesuré Im à l'organe de calcul DER_CALC tel qu'illustré à la Figure 14.

Dans d'autres modes de réalisation non limitatif, le dispositif de mesure DER_C peut être un dispositif d'échantillonnage numérique ou encore un dispositif qui effectue un redressement de courant puis une moyenne du courant redressé.

Ainsi, l'invention présente les avantages suivants.

- Elle permet de s'affranchir des dispersions des composants du dispositif d'antennes A, et des variations de tension d'alimentation Ubat, en se basant sur la linéarité entre champ magnétique et courant mesuré;
- Elle défini un étalon de mesure pour déterminer si un badge ID se trouve à l'intérieur ou à l'extérieur d'une zone autour du dispositif d'antennes A;
- Elle évite de faire un asservissement quelconque en tension;
- Elle permet à un constructeur de placer ces antennes intérieures à n'importe quel endroit du véhicule en permettant de définir deux coefficients de détection de référence par antenne (voire plus). Il n'a donc plus la contrainte de les centrer précisément au milieu du véhicule;
- Elle permet d'éviter une calibration qui prendrait en compte les variations de l'impédance ZA du dispositif d'antennes puisque grâce au coefficient, elles sont compensées dans le calcul du coefficient. Cela permet un temps de réponse plus rapide au niveau de la transmission de signaux (trames), puisqu'on peut émettre en même temps que l'on effectue une mesure de courant;
- Elle nécessite uniquement une mesure de courant ou une mesure de tension très simple;
- L'objet d'identification ID devient universel, c'est-à-dire qu'il peut être utilisé avec n'importe quel type de véhicule puisqu'un (ou plusieurs) coefficient de détection de référence Cref peut être défini pour chaque modèle de véhicule et est stocké dans le véhicule V;
- Le calcul des différents coefficients peut être facilement exécuté par un ASIC ce qui permet d'avoir un temps de réponse plus rapide. On décharge ainsi tout microprocesseur dans le dispositif de commande DER_DC; et
- le dispositif d'émission-réception DER ne dissipe pas trop d'énergie grâce à son étage de puissance P qui travaille avec une tension carrée.

Bien entendu, l'invention n'est pas limitée à l'application décrite du véhicule automobile, mais peut être utilisé dans toutes applications faisant intervenir une antenne basse fréquence et un objet d'identification telles qu'une application domotique.

## Revendications

1. Procédé de détection d'un objet d'identification (ID) dans une zone de communication de référence (Zr) autour d'un dispositif d'antenne(s) (A), **caractérisé en ce qu'**il comprend les étapes de :

   - mesurer un champ magnétique reçu (Br) par l'objet d'identification (ID) relatif à un champ magnétique émis (Be) par le dispositif d'antenne(s) (A), ce champ émis (Be) correspondant à un courant (Im) circulant dans le dispositif d'antenne(s) (A),
   - calculer un coefficient de détection (C) en fonction d'un ratio (N) champ magnétique reçu (Br) - champ magnétique étalon (Br0), et en fonction d'un ratio courant (Im) circulant dans le dispositif d'antenne(s) - courant étalon (10) relatif au champ magnétique étalon (Br0),
   - comparer le coefficient de détection calculé (C) avec au moins un coefficient de détection de référence (Cref1, Cref2, CG, CD) relatif à un champ magnétique de référence (Bref),
   - déterminer en fonction de cette comparaison si l'objet d'identification (ID) se trouve dans la zone de communication de référence (Zr), cette zone étant définie par le champ magnétique de référence (Bref).

2. Procédé de détection selon la revendication 1, **caractérisé en ce que** la zone de communication de référence (Zr) correspond à une zone représentative d'un habitacle (VH) de véhicule.

3. Procédé de détection selon la revendication 1 ou 2, **caractérisé en ce qu'**au moins deux zones de référence (ZrG, ZrD) sont définies autour du dispositif d'antenne(s) (A) auxquelles est associé un coefficient de détection de référence (CG, CD) respectif.

4. Procédé de détection selon la revendication précédente, **caractérisé en ce qu'**il comprend en outre une étape supplémentaire de contrôle de la position de l'objet d'identification (ID) par un dispositif d'antenne(s) extérieur (AX) si le coefficient calculé (C) se situe entre les coefficients de détection de référence (CG, CD) associés respectivement aux deux zones de référence (ZrG, ZrD).

5. Procédé de détection selon l'une quelconque des revendications précédentes, **caractérisé en ce que** le champ magnétique émis (Be) est généré au moyen d'un signal tension carré symétrique (U0) appliqué en entrée du dispositif d'antenne(s) (A), le signal tension générant le courant (Im) circulant dans le dispositif d'antenne(s) (A).

6. Procédé de détection selon la revendication précédente, **caractérisé en ce que** le signal tension (U0) en entrée du dispositif d'antenne(s) (A) comporte un rapport cyclique de 1/3.

7. Procédé de détection selon l'une des revendications 1 à 4, **caractérisé en ce que** pour le calcul du ratio courant circulant dans le dispositif d'antenne(s) (A) - courant étalon (I0), l'impédance (Zm) du dispositif d'antenne(s) (A) est considérée comme étant égale à une impédance étalon (Z0) correspondant au courant étalon (I0).

8. Système de détection (SYS) d'un objet d'identification (ID) dans une zone de communication de référence (Zr) autour d'un dispositif d'antenne(s) (A), le système (SYS) comprenant un dispositif d'antenne(s) (A) apte à émettre un champ magnétique (Be) vers un objet d'identification (ID), **caractérisé en ce qu'**il comporte :

- L'objet d'identification (ID) pour mesurer un champ magnétique reçu (Br) relatif au champ magnétique émis (Be) par le dispositif d'antenne(s) (A), ce champ émis (Be) correspondant à un courant (Im) circulant dans le dispositif d'antenne(s) (A),
- Un dispositif d'émission-réception (DER) comprenant un dispositif de commande (DER_DC) pour :

- comparer un coefficient de détection (C) avec au moins un coefficient de détection de référence (Cref) relatif à un champ magnétique de référence (Bref), le coefficient de détection (C) étant fonction d'un ratio champ magnétique reçu (Br) - un champ magnétique étalon (Br0), et fonction d'un ratio courant (Im) circulant dans le dispositif d'antenne(s) - courant étalon (I0) relatif au champ magnétique étalon (Br0), et
- déterminer en fonction de cette comparaison si l'objet d'identification (ID) se trouve dans une zone de communication de référence (Zr) autour du dispositif d'antenne(s) (A), cette zone étant définie par le champ magnétique de référence (Bref).

9. Système de détection (SYS) selon la revendication précédente, **caractérisé en ce que** le dispositif de commande (DER_C) est en outre apte à effectuer le calcul du coefficient de détection (C).

10. Système de détection (SYS) selon l'une des revendications précédentes 8 ou 9, **caractérisé en ce que** l'objet d'identification (ID) est en outre apte à envoyer un signal radiofréquence (T_RF) au dispositif d'émission-réception (DER) comprenant une information représentative (IB) du champ magnétique reçu (Br) après la réception d'une porteuse pure basse fréquence.

11. Système de détection (SYS) selon l'une quelconque des revendications précédentes 8 à 10, **caractérisé en ce qu'**il comprend un mode de diagnostic pour activer le calcul d'un coefficient de détection de référence (Cref) et pour renvoyer une valeur de ce coefficient (Cref).

12. Dispositif de commande (DER_C) étant apte à coopérer avec un dispositif d'antenne(s) (A) et avec un objet d'identification (ID), **caractérisé en ce qu'**il comprend :

- une mémoire (DER_MEM) pour sauvegarder la valeur d'un courant étalon (I0) relatif à un champ magnétique étalon (Br0) et sauvegarder la valeur d'au moins un coefficient de détection de référence (Cref),
- un contrôleur (DER_CALC) pour :

- comparer un coefficient de détection (C) avec au moins un coefficient de détection de référence (Cref) relatif à un champ magnétique de référence (Bref, le coefficient de détection (C) étant fonction d'un ratio champ magnétique reçu (Br) - un champ magnétique étalon (Br0), et fonction d'un ratio courant (Im) circulant dans le dispositif d'antenne(s) - courant étalon (I0) relatif au champ magnétique étalon (Br0), et
- déterminer en fonction de cette comparaison si l'objet d'identification (ID) se trouve dans une zone de communication de référence (Zr) autour du dispositif d'antenne(s) (A), cette zone étant définie par le champ magnétique de référence (Bref).

13. Dispositif de commande (DER_C) selon la revendication précédente, **caractérisé en ce qu'**il est en outre apte à effectuer le calcul du coefficient de détection (C).

**14.** Objet d'identification (ID) apte à coopérer avec un dispositif d'émission-réception (DER) et avec un dispositif d'antenne(s) (A), **caractérisé en ce qu'**il comprend :

- un récepteur (ID_RX) pour recevoir un champ magnétique (Br) relatif à un champ magnétique émis (Be) par le dispositif d'antenne(s) (A),
- un dispositif de mesure (RSSI) pour mesurer le champ magnétique reçu (Br), et
- un émetteur (ID_E) pour envoyer au dispositif d'émission-réception (DER) un signal (T_RF) comprenant une information (IB) représentative du champ magnétique reçu (Br) pour permettre un calcul d'un coefficient de détection (C) en fonction d'un ratio (N) champ magnétique reçu (Br) - un champ magnétique étalon (Br0) et en fonction d'un ratio courant (Im) circulant dans le dispositif d'antenne(s) - courant étalon (10) relatif au champ magnétique étalon (Br0).

**15.** Objet d'identification (ID) selon la revendication précédente, **caractérisé en ce que** l'information (IB) représentative du champ magnétique reçu (Br) est le ratio (N) champ magnétique reçu (Br) - champ magnétique étalon (Br0).

**16.** Objet d'identification (ID) selon l'une des revendications précédentes 14 ou 15, **caractérisé en ce qu'**il comprend en outre un contrôleur (ID_CALC) pour calculer le ratio (N) champ magnétique reçu (Br) - champ magnétique étalon (Br0).

**17.** Objet d'identification (ID) selon la revendication précédente 14, **caractérisé en ce que** l'information (IB) représentative du champ magnétique reçu (Br) est le champ magnétique reçu (Br).

**18.** Véhicule (V) automobile comprenant un habitacle (VH) dans lequel est disposé un dispositif de commande (DER_DC) selon l'une des revendications précédentes 12 ou 13 et un dispositif d'antenne(s) (A), le dispositif de commande (DER_DC) étant apte à coopérer avec le dispositif d'antenne(s) (A) et avec un objet d'identification (ID) selon l'une des revendications précédentes 14 à 17.

**Claims**

**1.** Method for detecting an identification object (ID) in a reference communication zone (Zr) around an antenna(s) device (A), **characterized in that** it comprises the steps of:

- measuring a magnetic field received (Br) by the identification object (ID) relating to a magnetic field emitted (Be) by the antenna(s) device (A), this field emitted (Be) corresponding to a current (Im) flowing in the antenna(s) device (A),
- calculating a detection coefficient (C) as a function of a ratio (N) magnetic field received (Br) - gauge magnetic field (Br0), and as a function of a ratio current (Im) flowing in the antenna(s) device - gauge current (I0) relating to the gauge magnetic field (Br0),
- comparing the calculated detection coefficient (C) with at least one reference detection coefficient (Cref1, Cref2, CG, CD) relating to a reference magnetic field (Bref),
- determining as a function of this comparison whether the identification object (ID) is situated in the reference communication zone (Zr), this zone being defined by the reference magnetic field (Bref).

**2.** Detection method according to Claim 1, **characterized in that** the reference communication zone (Zr) corresponds to a zone representative of a vehicle cabin (VH).

**3.** Detection method according to Claim 1 or 2, **characterized in that** at least two reference zones (ZrG, ZrD) are defined around the antenna(s) device (A) and with which a respective reference detection coefficient (CG, CD) is associated.

**4.** Detection method according to the preceding claim, **characterized in that** it furthermore comprises an additional step of monitoring the position of the identification object (ID) by an exterior antenna(s) device (AX) if the calculated coefficient (C) is situated between the reference detection coefficients (CG, CD) associated respectively with the two reference zones (ZrG, ZrD).

5. Detection method according to any one of the preceding claims, **characterized in that** the magnetic field emitted (Be) is generated by means of a symmetric square voltage signal (U0) applied at the input of the antenna(s) device (A), the voltage signal generating the current (Im) flowing in the antenna(s) device (A).

6. Detection method according to the preceding claim, **characterized in that** the voltage signal (U0) at the input of the antenna (s) device (A) comprises a duty ratio of 1/3.

7. Detection method according to one of Claims 1 to 4, **characterized in that** for the calculation of the ratio current flowing in the antenna (s) device (A) - gauge current (I0), the impedance (Zm) of the antenna(s) device (A) is considered to be equal to a gauge impedance (Z0) corresponding to the gauge current (I0).

8. Detection system (SYS) for detecting an identification object (ID) in a reference communication zone (Zr) around an antenna (s) device (A), the system (SYS) comprising an antenna (s) device (A) able to emit a magnetic field (Be) towards an identification object (ID), **characterized in that** it comprises:

   - The identification object (ID) for measuring a magnetic field received (Br) relating to the magnetic field emitted (Be) by the antenna(s) device (A), this field emitted (Be) corresponding to a current (Im) flowing in the antenna (s) device (A),
   - An emission-reception device (DER) comprising a control device (DER_DC) for:

      - comparing a detection coefficient (C) with at least one reference detection coefficient (Cref) relating to a reference magnetic field (Bref), the detection coefficient (C) being dependent on a ratio magnetic field received (Br) - a gauge magnetic field (Br0), and dependent on a ratio current (Im) flowing in the antenna (s) device - gauge current (I0) relating to the gauge magnetic field (Br0), and
      - determining as a function of this comparison whether the identification object (ID) lies in a reference communication zone (Zr) around the antenna(s) device (A), this zone being defined by the reference magnetic field (Bref).

9. Detection system (SYS) according to the preceding claim, **characterized in that** the control device (DER_C) is furthermore able to perform the calculation of the detection coefficient (C).

10. Detection system (SYS) according to one of the preceding Claims 8 or 9, **characterized in that** the identification object (ID) is furthermore able to dispatch a radiofrequency signal (T_RF) to the emission-reception device (DER) comprising an information item (IB) representative of the magnetic field received (Br) after the reception of a low-frequency pure carrier.

11. Detection system (SYS) according to any one of the preceding Claims 8 to 10, **characterized in that** it comprises a mode of diagnosis for activating the calculation of a reference detection coefficient (Cref) and for returning a value of this coefficient (Cref).

12. Control device (DER_C) being able to cooperate with an antenna (s) device (A) and with an identification object (ID), **characterized in that** it comprises:

   - a memory (DER_MEM) for saving the value of a gauge current (I0) relating to a gauge magnetic field (Br0) and saving the value of at least one reference detection coefficient (Cref),
   - a controller (DER_CALC) for:

      - comparing a detection coefficient (C) with at least one reference detection coefficient (Cref) relating to a reference magnetic field (Bref), the detection coefficient (C) being dependent on a ratio magnetic field received (Br) - a gauge magnetic field (Br0), and dependent on a ratio current (Im) flowing in the antenna (s) device - gauge current (I0) relating to the gauge magnetic field (Br0), and
      - determining as a function of this comparison whether the identification object (ID) lies in a reference communication zone (Zr) around the antenna(s) device (A), this zone being defined by the reference magnetic field (Bref).

13. Control device (DER_C) according to the preceding claim, **characterized in that** it is furthermore able to perform the calculation of the detection coefficient (C).

14. Identification object (ID) able to cooperate with an emission-reception device (DER) and with an antenna(s) device (A), **characterized in that** it comprises:

- a receiver (ID_RX) for receiving a magnetic field (Br) relating to a magnetic field emitted (Be) by the antenna (s) device (A),
- a measurement device (RSSI) for measuring the magnetic field received (Br), and
- an emitter (ID_E) for dispatching to the emission-reception device (DER) a signal (T_RF) comprising an information item (IB) representative of the magnetic field received (Br) so as to allow a calculation of a detection coefficient (C) as a function of a ratio (N) magnetic field received (Br) - a gauge magnetic field (Br0) and as a function of a ratio current (Im) flowing in the antenna(s) device - gauge current (I0) relating to the gauge magnetic field (Br0).

15. Identification object (ID) according to the preceding claim, **characterized in that** the information item (IB) representative of the magnetic field received (Br) is the ratio (N) magnetic field received (Br) - gauge magnetic field (Br0).

16. Identification object (ID) according to one of the preceding Claims 14 or 15, **characterized in that** it furthermore comprises a controller (ID_CALC) for calculating the ratio (N) magnetic field received (Br) - gauge magnetic field (Br0).

17. Identification object (ID) according to the preceding Claim 14, **characterized in that** the information item (IB) representative of the magnetic field received (Br) is the magnetic field received (Br).

18. Motor vehicle (V) comprising a cabin (VH) in which is disposed a control device (DER_DC) according to one of the preceding Claims 12 or 13 and an antenna (s) device (A), the control device (DER_DC) being able to cooperate with the antenna (s) device (A) and with an identification object (ID) according to one of the preceding Claims 14 to 17.


**Patentansprüche**

1. Verfahren zur Erfassung eines Identifikationsobjekts (ID) in einer Bezugskommunikationszone (Zr) um eine Antennenvorrichtung (A) herum, **dadurch gekennzeichnet, dass** es die folgenden Schritte enthält:

- Messen eines vom Identifikationsobjekt (ID) empfangenen Magnetfelds (Br) bezüglich eines von der Antennenvorrichtung (A) ausgestrahlten Magnetfelds (Be), wobei dieses ausgestrahlte Feld (Be) einem in der Antennenvorrichtung (A) fließenden Strom (Im) entspricht,
- Berechnen eines Erfassungskoeffizienten (C) abhängig von einem Verhältnis (N) des empfangenen Magnetfelds (Br) zu einem Standardmagnetfeld (Br0), und abhängig von einem Verhältnis des in der Antennenvorrichtung fließenden Stroms (Im) zu einem Standardstrom (10) bezüglich des Standardmagnetfelds (Br0),
- Vergleichen des berechneten Erfassungskoeffizienten (C) mit mindestens einem Bezugserfassungskoeffizienten (Cref1, Cref2, CG, CD) bezüglich eines Bezugsmagnetfelds (Bref),
- Bestimmen abhängig von diesem Vergleich, ob das Identifikationsobjekt (ID) sich in der Bezugskommunikationszone (Zr) befindet, wobei diese Zone durch das Bezugsmagnetfeld (Bref) definiert wird.

2. Erfassungsverfahren nach Anspruch 1, **dadurch gekennzeichnet, dass** die Bezugskommunikationszone (Zr) einer für einen Fahrzeuginnenraum (VH) repräsentativen Zone entspricht.

3. Erfassungsverfahren nach Anspruch 1 oder 2, **dadurch gekennzeichnet, dass** mindestens zwei Bezugszonen (ZrG, ZrD) um die Antennenvorrichtung (A) herum definiert sind, denen je ein Bezugserfassungskoeffizient (CG, CD) zugeordnet ist.

4. Erfassungsverfahren nach dem vorhergehenden Anspruch, **dadurch gekennzeichnet, dass** es außerdem einen zusätzlichen Schritt der Überwachung der Position des Identifikationsobjekts (ID) durch eine äußere Antennenvorrichtung (AX) enthält, wenn der berechnete Koeffizient (C) sich zwischen den Bezugserfassungskoeffizienten (CG, CD) befindet, die jeweils den zwei Bezugszonen (ZrG, ZrD) zugeordnet sind.

5. Erfassungsverfahren nach einem der vorhergehenden Ansprüche, **dadurch gekennzeichnet, dass** das ausgestrahlte Magnetfeld (Be) mittels eines symmetrischen Rechteckspannungssignals (U0) erzeugt wird, das an den Eingang der Antennenvorrichtung (A) angelegt wird, wobei das Spannungssignal den in der Antennenvorrichtung (A) fließenden Strom (Im) erzeugt.

6.  Erfassungsverfahren nach dem vorhergehenden Anspruch, **dadurch gekennzeichnet, dass** das Spannungssignal (U0) am Eingang der Antennenvorrichtung (A) ein zyklisches Verhältnis von 1/3 aufweist.

7.  Erfassungsverfahren nach einem der Ansprüche 1 bis 4, **dadurch gekennzeichnet, dass** für die Berechnung des Verhältnisses des in der Antennenvorrichtung (A) fließenden Stroms zum Standardstrom (I0) die Impedanz (Zm) der Antennenvorrichtung (A) als gleich einer Standardimpedanz (Z0) entsprechend dem Standardstrom (I0) angesehen wird.

8.  System zur Erfassung (SYS) eines Identifikationsobjekts (ID) in einer Bezugskommunikationszone (Zr) um eine Antennenvorrichtung (A) herum, wobei das System (SYS) eine Antennenvorrichtung (A) enthält, die ein Magnetfeld (Be) zu einem Identifikationsobjekt (ID) ausstrahlen kann, **dadurch gekennzeichnet, dass** es aufweist:

    - das Identifikationsobjekt (ID), um ein empfangenes Magnetfeld (Br) bezüglich des durch die Antennenvorrichtung (A) ausgestrahlten Magnetfelds (Be) zu messen, wobei dieses ausgestrahlte Feld (Be) einem in der Antennenvorrichtung (A) fließen Strom (Im) entspricht,
    - eine Sende-Empfangs-Vorrichtung (DER), die eine Steuervorrichtung (DER_DC) enthält, um:

        - einen Erfassungskoeffizienten (C) mit mindestens einem Bezugserfassungskoeffizienten (Cref) bezüglich eines Bezugsmagnetfelds (Bref) zu vergleichen, wobei der Erfassungskoeffizient (C) von einem Verhältnis des empfangenen Magnetfelds (Br) zu einem Standardmagnetfeld (Br0) abhängt, und von einem Verhältnis des in der Antennenvorrichtung fließenden Stroms (Im) zum Standardstrom (I0) bezüglich des Standardmagnetfelds (Br0) abhängt, und
        - abhängig von diesem Vergleich zu bestimmen, ob das Identifikationsobjekt (ID) sich in einer Bezugskommunikationszone (Zr) um die Antennenvorrichtung (A) herum befindet, wobei diese Zone von dem Bezugsmagnetfeld (Bref) definiert wird.

9.  Erfassungssystem (SYS) nach dem vorhergehenden Anspruch, **dadurch gekennzeichnet, dass** die Steuervorrichtung (DER_C) außerdem die Berechnung des Erfassungskoeffizienten (C) durchführen kann.

10. Erfassungssystem (SYS) nach einem der vorhergehenden Ansprüche 8 oder 9, **dadurch gekennzeichnet, dass** das Identifikationsobjekt (ID) außerdem ein Hochfrequenzsignal (T_RF) an die Sende-Empfangs-Vorrichtung (DER) senden kann, das eine für das empfangene Magnetfeld (Br) repräsentative Information (IB) nach dem Empfang einer reinen Niederfrequenz-Trägerwelle enthält.

11. Erfassungssystem (SYS) nach einem der vorhergehenden Ansprüche 8 bis 10, **dadurch gekennzeichnet, dass** es einen Diagnosemodus enthält, um die Berechnung eines Bezugserfassungskoeffizienten (Cref) zu aktivieren und einen Wert dieses Koeffizienten (Cref) zurückzusenden.

12. Steuervorrichtung (DER_C), die mit einer Antennenvorrichtung (A) und mit einem Identifikationsobjekt (ID) zusammenwirken kann, **dadurch gekennzeichnet, dass** sie enthält:

    - einen Speicher (DER MEM), um den Wert eines Standardstroms (I0) bezüglich eines Standardmagnetfelds (Br0) zu sichern und den Wert mindestens eines Bezugserfassungskoeffizienten (Cref) zu sichern,
    - ein Steuergerät (DER_CALC), um:

        - einen Erfassungskoeffizienten (C) mit mindestens einem Bezugserfassungskoeffizienten (Cref) bezüglich eines Bezugsmagnetfelds (Bref) zu vergleichen, wobei der Erfassungskoeffizient (C) von einem Verhältnis des empfangenen Magnetfelds (Br) zu einem Standardmagnetfeld (Br0) abhängt, und von einem Verhältnis des in der Antennenvorrichtung fließenden Stroms (Im) zu einem Standardstrom (I0) bezüglich des Standardmagnetfelds (Br0) abhängt, und
        - abhängig von diesem Vergleich zu bestimmen, ob das Identifikationsobjekt (ID) sich in einer Bezugskommunikationszone (Zr) um die Antennenvorrichtung (A) herum befindet, wobei diese Zone von dem Bezugsmagnetfeld (Bref) definiert wird.

13. Steuervorrichtung (DER_C) nach dem vorhergehenden Anspruch, **dadurch gekennzeichnet, dass** sie außerdem die Berechnung des Erfassungskoeffizienten (C) durchführen kann.

14. Identifikationsobjekt (ID), das mit einer Sende-Empfangs-Vorrichtung (DER) und mit einer Antennenvorrichtung (A) zusammenwirken kann, **dadurch gekennzeichnet, dass** es enthält:

- einen Empfänger (ID_RX), um ein Magnetfeld (Br) bezüglich eines von der Antennenvorrichtung (A) ausgestrahlten Magnetfelds (Be) zu empfangen,
- eine Messvorrichtung (RSSI), um das empfangene Magnetfeld (Br) zu messen, und
- einen Sender (ID_E), um an die Sende-Empfangs-Vorrichtung (DER) ein Signal (T_RF) zu senden, das eine für das empfangene Magnetfeld (Br) repräsentative Information (IB) enthält, um eine Berechnung eines Erfassungskoeffizienten (C) abhängig von einem Verhältnis (N) des empfangenen Magnetfelds (Br) zu einem Standardmagnetfeld (Br0) und abhängig von einem Verhältnis des in der Antennenvorrichtung fließenden Stroms (Im) zu einem Standardstrom (I0) bezüglich des Standardmagnetfelds (Br0) zu erlauben.

15. Identifikationsobjekt (ID) nach dem vorhergehenden Anspruch, **dadurch gekennzeichnet, dass** die für das empfangene Magnetfeld (Br) repräsentative Information (IB) das Verhältnis (N) des empfangenen Magnetfelds (Br) zum Standardmagnetfeld (Br0) ist.

16. Identifikationsobjekt (ID) nach einem der vorhergehenden Ansprüche 14 oder 15, **dadurch gekennzeichnet, dass** es außerdem ein Steuergerät (ID_CALC) enthält, um das Verhältnis (N) des empfangenen Magnetfelds (Br) zum Standardmagnetfeld (Br0) zu berechnen.

17. Identifikationsobjekt (ID) nach dem vorhergehenden Anspruch 14, **dadurch gekennzeichnet, dass** die für das empfangene Magnetfeld (Br) repräsentative Information (IB) das empfangene Magnetfeld (Br) ist.

18. Kraftfahrzeug (V), das einen Innenraum (VH) enthält, in dem eine Steuervorrichtung (DER_DC) nach einem der vorhergehenden Ansprüche 12 oder 13 und eine Antennenvorrichtung (A) angeordnet sind, wobei die Steuervorrichtung (DER_DC) mit der Antennenvorrichtung (A) und mit einem Identifikationsobjekt (ID) nach einem der vorhergehenden Ansprüche 14 bis 17 zusammenwirken kann.

FIG. 1

FIG. 2

**V**

**VH**

**AI1**

**Ze (I0, Br0)**

**Zr1(Po1, Cref1, Bref1)**

**Zr2(Po2, Cref2, Bref2)**

**FIG. 3**

**FIG. 4**

**Zr1(Cref1, Bref1)**

**V**

**VH**

**AI1**

**Po6 (B6, C6<C0)**   **Po7 (B7, C7>C0)**

**FIG. 5**

FIG. 6

**0** — IO, Br0, Cref

**1** — ID(Br)

$$Br = \sum Bra$$

**2** — $N = (Br/Br0)^2$

**3** — Im

**4** — $C = f(N, IO, Im)$

**5** — $C \geq ? \, Cref$

**N**

**5** — $ID \notin Zr$

**5** — $ID \in Zr$

**FIG. 7**

**FIG. 8**

FIG. 9

**FIG. 10**

**FIG. 11**

**V**

**ZX3**  **ZrD(Cd)**

**VH_G**  **ID9 (C9)**  **AX3**

**ML**

**VH_D**  **VH**

**ID8 (C8)**  **AI1**  **AX2**

**Ze**  **ZX2**  **ZrG(Cg)**

**FIG. 12**

**FIG. 13**

DER_CALC

$N=(Br/B0)^2$    Im    $\alpha$

DER_RF        DER_C  ◄  DER_P

U0

DER_A

$T\_RF (N)$        T_BF    Be

Br

ID_RX(ID_A)

Bx, By, Bz

ID_TX  ◄  $N=(Br/B0)^2$  RSSI

**FIG. 14**

DER_P

Ubat

S1

S3

U

S2

S4

DER_A

**FIG. 15**

**EP 2 125 450 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2878964